# EUROPEAN PATENT APPLICATION

(11) **EP 4 794 301 A1**
(43) Date of publication of application: **19.08.2026**
(21) Application number: 26159372.7
(22) Date of filing: 18.02.2026
(51) Int. Cl.: H04L 67/10, H04L 67/565, H04W 4/70, H04W 4/80, H04L 67/12, H04L 69/40

(54) **SYSTEMS AND METHODS FOR DYNAMIC RECONFIGURATION OF NETWORKS OF INTERNET OF THINGS (IOT) DEVICES**

(30) Priority: 18.02.2025 US 202519056330
(71) Applicant: Walmart Apollo, LLC, Bentonville, Arkansas 72716 (US)
(72) Inventor: RIGLING, Justin, Bentonville, 72716 (US); PASSMORE, Greg, Bentonville, 72716 (US); BRISKEY, Paul, Bentonville, 72716 (US)
(74) Representative: Appleyard Lees IP LLP

(57) **Abstract**

The present disclosure, in various embodiments, provides a system, method, and device for dynamic reconfiguration of networks of Internet of Things (loT) devices. The method can include collecting network health data and gateway health data from a source gateway and transmitting a handoff signal to a source gateway. The handoff signal can initiate a device assignment routine when at least one trigger criterion is met, such as of a load-balancing event, a failover event, a roaming event, or a userinitiated event. A target gateway can be determined based on selection parameters and can receive relevant device details from the source gateway to enable the loT device to connect with the target gateway.

## Description

### CROSS-REFERENCE TO RELATED APPLICATION

This application claims the benefit of U.S. Non-Provisional Application No. 19/056,330 filed February 18, 2025, which is incorporated herein by reference in its entirety.

### TECHNICAL FIELD

The embodiments described herein generally relate to systems, devices, and methods for managing and coordinating wireless networks of Internet of Things (IoT) devices. In particular, the embodiments relate to dynamic reconfiguration of networks of Internet of Things (IoT) devices.

### BACKGROUND

The following statement does not constitute an acknowledgment that any subject matter herein is considered prior art or commonly known to those skilled in the relevant art.

The Internet of Things (loT) refers to a network of interconnected devices that communicate with other device(s) and with external systems, often with minimal human intervention. IoT devices typically include sensors that monitor various parameters in the surrounding environment. The sensors collect data and transmit it to other devices or a central management system using wired or wireless communication protocols. Common sensors include thermometers, accelerometers, microphones, cameras, motion detectors, moisture sensors, and energy meters, among others. The sensed data can be used to automate processes, monitor environmental conditions, or trigger specific actions based on predefined criteria. For example, a moisture detector in a warehouse might trigger an alert when a leak is detected, or a motion sensor might turn on lights when movement is detected within a room.

In addition to sensors, loT devices may include actuators, which allow the loT system to respond to data signals and perform physical tasks. An actuator is a mechanism that performs an action, often in response to instructions from a network-connected controller. For instance, a smart thermostat may include both sensors (to monitor temperature) and actuators (to control HVAC systems). The thermostat collects temperature data and sends it to the network, and in response to commands from a remote controller, the actuator adjusts the heating or cooling system accordingly. The interplay between sensors and actuators enables loT systems to support a wide range of applications, from remote monitoring and automation in smart homes to inventory management and environmental monitoring in industrial settings.

The retail industry uses loT technology to improve operations, optimize customer experiences, and streamline inventory management. IoT devices can be deployed throughout the entire supply chain, from warehouses to retail floors, enabling real-time monitoring and control. For example, asset tags, security sensors, and environmental monitoring devices track the location, condition, and safety of products stored in warehouses. These sensors can ensure that items are maintained under appropriate conditions by monitoring variables such as temperature, humidity, and motion. During product transportation, fleet management sensors can gather data on vehicle status, temperature, and location, ensuring goods are delivered to retail locations or end customers without disruption. IoT-enabled tracking helps retailers maintain inventory accuracy, prevent product loss, and comply with quality standards throughout the distribution process.

Within stores, electronic shelf labels (ESL) utilize e-paper or e-ink displays to dynamically present pricing, promotions, and availability information, synced from the retailer's central system. ESL systems minimize the need for manual price updates, ensuring consistency and accuracy across products. Retailers can also integrate occupancy sensors, geolocation trackers, and customer interaction technologies to optimize store layouts and personalize marketing strategies. For example, geolocation technology can track customer movements within the store to identify high-traffic areas and adjust product placements accordingly. These loT solutions enable retailers to deliver customized promotions, real-time discounts, and individualized pricing based on customer behavior.

loT networks generally operate on wireless communication technologies that enable devices to transmit data over long and short distances. Some loT systems rely on cellular technologies such as LTE and 5G to connect remote sensors to cloud platforms, while others use Wi-Fi, Bluetooth, Zigbee, LoRa, or proprietary low-power communication protocols for local communication between devices and gateways. The communication protocols are designed to support a variety of network topologies, such as star, mesh, or peer-to-peer configurations. For example, Bluetooth Low Energy (BLE) can be used for local communication due to its low power consumption, making it ideal for devices such as wearables and electronic shelf labels (ESL). Wi-Fi networks, on the other hand, offer higher bandwidth and are suitable for transmitting large volumes of data, such as video feeds from security cameras.

Many existing loT networks employ gateways to operate as intermediaries between loT devices and cloud platforms. Gateways aggregate data from multiple devices and manage network connectivity. Gateways operate as local hubs that reduce the communication burden on individual sensors. The gateways can also translate communication protocols and perform local processing to optimize network performance. Gateways may also implement edge computing techniques, where certain data processing tasks are performed locally, rather than sending all data to a remote cloud. However, challenges arise in managing large numbers of devices and gateways, especially in scenarios where devices frequently move between different coverage areas or where network conditions fluctuate.

The implementation of loT networks also requires consideration of several technical challenges. The challenges include network scalability, device coordination, interference mitigation, data security, and power management. High-density environments, such as retail stores or industrial facilities, present additional complexities, including packet collisions, overlapping connections, and the need for seamless device assignments between gateways. Furthermore, loT devices often operate under constrained conditions, such as limited battery life and restricted processing power, requiring protocols and systems that are efficient and reliable. As loT systems scale to support thousands of devices, it becomes important to address issues related to network latency, reliable data delivery, and secure communication.

Enterprises, including retailers, wholesalers, and logistics companies, may rely on loT deployments from multiple vendors to address different operational needs. However, a vendor may require its own set of gateways and cloud-based management systems, resulting in the creation of shadow networks. These overlapping networks not only increase the complexity of installation and maintenance but also introduce operational inefficiencies by generating data silos and duplicating infrastructure. The fragmented approach also increases the risk of network interference and security vulnerabilities, as different systems may lack coordination or integrated security protocols.

Furthermore, the loT deployments in retail environments may involve higher densities of devices and gateways. Retail settings, such as grocery stores or warehouses, may require the coordination of tens of thousands of electronic shelf labels (ESLs) and hundreds of gateways. This high-density network creates unique technical challenges, such as the increased probability of collisions between advertising packets transmitted by different devices, which can lead to longer discovery latencies and hinder network performance.

Since advertising packets from an IoT device may be received by multiple gateways unaware of each other's activities, duplicate connections to the same device can be established, leading to inefficiencies and wasted resources. These challenges are further exacerbated by the absence of sitewide coordination mechanisms between gateways.

Implementing PAwR (Periodic Advertising with Responses) in high-density environments, such as retail settings, introduces synchronization challenges that can significantly impact network efficiency and device performance. Synchronizing a gateway to an loT device transmitting periodic advertising packets is inherently time-consuming, as the process involves multiple steps and message exchanges that increase discovery latency. The process of locating, parsing, and synchronizing with multiple packet types leads to delays that reduce responsiveness and inhibit real-time applications. Another significant challenge with PAwR arises when attempting to hand off a device's connection from one gateway to another. When an loT device has an active PAwR association with a gateway, the device must wait for the current association to time out before it can begin an onboarding process with a new gateway, such as gateway. This delay results in considerable downtime, affecting both the continuity of service for the loT device and the stability of other devices within the gateways' coverage area.

In dense loT environments, such as retail, healthcare, and industrial deployments, maintaining continuous device connectivity is challenging, particularly as loT devices move across different zones or coverage areas. With conventional BLE protocols, which do not inherently support device assignment capabilities between gateways, loT devices risk experiencing dropped connections when they move out of a single gateway's range. Further, in settings where devices require roaming capabilities, such as warehouses or logistics centers, an loT device moving across different coverage areas risks prolonged connection disruptions. Without a coordinated mechanism for device roaming across gateways, the device may need to reinitiate a connection every time it moves into a new gateway's coverage area.

Additionally, in conventional systems, the absence of a coordinated failover mechanism creates vulnerabilities. When a gateway experiences failure, whether due to maintenance requirements, technical issues, or network load, the connected devices may lose connectivity without an alternative connection option. This can result in data gaps, missed updates, or the need for manual intervention to restore connectivity. These failures become particularly problematic in high-density deployments, where a single gateway or access point may be handling hundreds of devices simultaneously. The impact of a gateway failure can therefore be substantial, causing broad disruptions.

Another issue arises in environments where load balancing is desired. As loT devices may be densely clustered in certain areas, specific gateways become overloaded while others remain underutilized. Without a method to dynamically distribute connections across available gateways, excessive load on a single gateway can lead to degraded performance, high latency, and increased error rates. This situation not only diminishes device response times but can also result in device disconnections, necessitating repeated connection attempts that further increase network congestion.

Therefore, alternative systems and methods are desired to remedy the inefficiencies of conventional systems.

### SUMMARY

The purpose of this summary is to acquaint the reader with the subsequent detailed description, without limiting or defining any claimed or unclaimed inventions. This summary is not a comprehensive analysis and does not aim to highlight key features. Instead, the summary introduces certain inventive concepts in a generalized form as an introduction to the detailed description that follows. One or more inventions may reside in any combination or sub-combination of the elements or process steps disclosed in any part of this document, including its claims and figures.

In one aspect, a sitewide controller can be configured to collect network health data and gateway health data from a source gateway. The sitewide controller can be further configured to transmit a device assignment signal to a source gateway, and the device assignment signal can be configured to initiate a device assignment routine when one or more device assignment trigger criteria is satisfied at the source gateway. The device assignment trigger can comprise at least one of a load-balancing event, a failover event, a roaming event, or a user-initiated event. The sitewide controller can be further configured to determine a target gateway based on a plurality of selection parameters within the device assignment routine. The sitewide controller can be further configured to receive loT device details from the source gateway and transmit the loT device details to the target gateway to enable the loT device to connect with the target gateway, and the loT device details can include at least an identifier associated with one or more of an loT device or plurality of loT devices, the identifier having been utilized by the source gateway to connect to the loT device. In some embodiments, the gateway health data can comprise one or more of CPU load, memory usage, network throughput, radio utilization including transmit, receive, and idle timing, mix of reported and assigned device types, received signal strengths, transmit power, response times, timeout events, latency indicators, clock accuracy, connection stability, connection failures, response failures, packet retries, diagnostic error reports, data consumption, noise levels across communication channels, channel map, spectral capacity, or data packet loss. In some embodiments, the load-balancing event can occur in response to the gateway health data of the source gateway exceeding load thresholds based on one or more of CPU usage, memory consumption, or congestion metrics. In some embodiments, the failover event can occur in response to the source gateway experiencing a failure or a maintenance downtime. In some embodiments, the roaming event can occur in response to one or more of: the sitewide controller determining a signal strength differential that is based at least in part on gateway data received from the target gateway indicating that the target gateway is receiving a signal having a first signal strength from the loT device, the first signal strength being greater than a second strength of the signal received by the source gateway; or, the sitewide controller determining movement of the loT device based at least in part on a predictive roaming model that includes historical model data correlated to signal strength data. In some embodiments, the identifier associated with one or more of an loT device or plurality of loT devices can include at least one of a MAC address or a vMAC address. In some embodiments, the plurality of selection parameters of the target gateway can comprise at least one of load capacity, radio availability, proximity of the target gateway to an loT device, signal strength, communication history of the target gateway and the loT device, or spectral resources. In some embodiments, the loT device details can include one or more of timing data, device-specific identifiers, encryption keys, communication states, device status indicators, or protocol versions.

In one aspect, a method can comprise collecting a network health data and gateway health data from a source gateway. The method can further comprise transmitting a device assignment signal to a source gateway, the device assignment signal can be configured to initiate a device assignment routine when a device assignment trigger is met at the source gateway. The device assignment trigger can comprise at least one of a load-balancing event, a failover event, a roaming event, or a user-initiated event. The method can further comprise determining a target gateway based on a plurality of selection parameters within the device assignment routine. The method can further comprise receiving loT device details from the source gateway and transmitting the loT device details to the target gateway to enable the loT device to connect with the target gateway, the loT device details can include at least an identifier associated with one or more of an IoT device or plurality of loT devices, the identifier having been utilized by the source gateway to connect to the loT device. In some embodiments, the gateway health data can comprise one or more of CPU load, memory usage, network throughput, radio utilization including transmit, receive, and idle timing, mix of reported and assigned device types, received signal strengths, transmit power, response times, timeout events, latency indicators, clock accuracy, connection stability, connection failures, response failures, packet retries, diagnostic error reports, data consumption, noise levels across communication channels, channel map, spectral capacity, or data packet loss. In some embodiments, initiating the device assignment routine for the load balancing event can comprise initiating the device assignment routine in response to the gateway health data of the source gateway exceeding load thresholds based on one or more of CPU usage, memory consumption, or congestion metrics. In some embodiments, initiating the device assignment routine for the failover event can comprise initiating the device assignment routine in response to the source gateway experiencing a failure or a maintenance downtime. In some embodiments, initiating the device assignment routine for the roaming event can comprise initiating the device assignment routine in response to one or more of: determining a signal strength differential that is based at least in part on gateway data received from the target gateway indicating that the target gateway is receiving a signal having a first signal strength from the loT device, the first signal strength being greater than a second strength of the signal received by the source gateway; or, determining movement of the loT device based at least in part on a predictive roaming model that includes historical model data correlated to signal strength data. In some embodiments, the identifier associated with one or more of an loT device or plurality of loT devices can include at least one of a MAC address or a vMAC address. In some embodiments, the plurality of selection parameters of the target gateway can comprise at least one of load capacity, radio availability, proximity of the target gateway to an loT device, signal strength, communication history of the target gateway and the loT device, or spectral resources. In some embodiments, the loT device details can include one or more of timing data, device-specific identifiers, encryption keys, communication states, device status indicators, or protocol versions.

In one aspect, a computer-readable storage medium, storing instructions thereon, that, when executed by a processor, configure the processor to collect network health data and gateway health data from a source gateway. The computer-readable storage medium, storing instructions thereon, that, when executed by a processor, further configures the processor to transmit a device assignment signal to a source gateway, and device assignment signal can be configured to initiate a device assignment routine when a device assignment trigger is met at the source gateway, wherein the handoff trigger comprises at least one of a load-balancing event, a failover event, a roaming event, or a user-initiated event. The computer-readable storage medium, storing instructions thereon, that, when executed by a processor, further configures the processor to determine a target gateway based on a plurality of selection parameters within the device assignment routine. The computer-readable storage medium, storing instructions thereon, that, when executed by a processor, further configures the processor to receive loT device details from the source gateway and transmit the loT device details to the target gateway to enable the target gateway to connect with the loT device and the loT device details includes at least an identifier associated with one or more of an IoT device or plurality of loT devices, the identifier having been utilized by the source gateway to connect to the loT device. In some embodiments, the gateway health data can comprise one or more of CPU load, memory usage, network throughput, radio utilization including transmit, receive, and idle timing, mix of reported and assigned device types, received signal strengths, transmit power, response times, timeout events, latency indicators, clock accuracy, connection stability, connection failures, response failures, packet retries, diagnostic error reports, data consumption, noise levels across communication channels, channel map, spectral capacity, or data packet loss. In some embodiments, the load-balancing event can occur in response to the gateway health data of the source gateway exceeding load thresholds based on one or more of CPU usage, memory consumption, or congestion metrics. In some embodiments, the failover event can occur in response to the source gateway experiencing a failure or a maintenance downtime.

### BRIEF DESCRIPTION OF THE DRAWINGS

The present invention will be described through exemplary, non-limiting embodiments, with reference to the accompanying drawings, in which:
FIG. 1 is an illustrative block diagram of the loT wireless network management system 100, according to an embodiment.
FIG. 2 is an illustrative block diagram of the loT wireless network management system 200, according to an embodiment.
FIG. 3 is an illustrative block diagram of the edge connect module 300, according to an embodiment.
FIG. 4 is an illustrative block diagram of the loT wireless network management system 400, according to an embodiment.
FIG. 5 is an illustrative block diagram of the loT edge connectivity framework 500, according to an embodiment.
FIG. 6 is an illustrative flow chart of the event detection and trigger mechanism 600, according to an embodiment.
FIG. 7 is an illustrative flow chart of the event detection and trigger mechanism 700, according to an embodiment.
FIG. 8 is an illustrative flow chart of a sitewide configuration method 800, according to an embodiment.
FIG. 9 is an illustrative flow chart of an advertising message filtering method 900, according to an embodiment.
FIG. 10 is an illustrative flow chart of a device assignment method 1000, according to an embodiment.

### DESCRIPTION OF VARIOUS EMBODIMENTS

The embodiments disclosed herein are illustrations of various implementations of the inventive concepts and techniques described in this disclosure. The statements made in this description do not necessarily limit any of the claimed embodiments. Rather, they are provided to illustrate different possible implementations, and variations in form or configuration may still fall within the scope of the invention(s). Certain features described herein may apply to some embodiments but not to others. Additionally, unless expressly indicated otherwise, the use of singular elements shall include plural forms, and vice versa, with no loss of generality or change in the scope of the invention.

The accompanying drawings are provided to aid in the understanding of the embodiments and do not limit the scope of the invention(s). For clarity and consistency, like reference numerals are used throughout the figures to refer to the same or similar components. It will also be apparent to those skilled in the art that the invention(s) described herein may be practiced without specific details mentioned in certain examples. In some instances, well-known methods, procedures, or elements may not be described in detail to avoid unnecessarily obscuring the core aspects of the invention(s).

It should be noted that the terms of approximation are used herein to allow for reasonable deviations from the literal values, provided such deviations do not substantially alter the intended function or purpose. Further, the use of terms such as "including" and "comprising" shall mean "including, but not limited to," unless explicitly specified otherwise. Likewise, lists of items are provided for illustration only and should not be construed as mutually exclusive or exhaustive unless expressly indicated.

The systems and methods described herein may be implemented in hardware, software, or a combination of both. For example, these embodiments may be realized as computer programs executing on one or more programmable computing devices, which may include servers, network appliances, embedded devices, laptops, smartphones, or other computing devices capable of performing the described functionality. These computer programs or computer-executable instructions may be written in various programming languages, including but not limited to high-level procedural, object-oriented, or scripting languages, or in compiled or interpreted languages. They may be stored on non-transitory computer-readable media such as magnetic disks, optical disks, or solid-state storage devices, which when executed by a computing system, perform the methods described herein.

Certain sections in the present disclosure may be provided under a title or heading. The title or heading is included solely for ease of reference and clarity. The disclosure within the titled sections is not limited to the specific embodiments indicated and may apply to other embodiments throughout the present disclosure.

The Internet of Things (loT) can refer to a distributed network of interconnected devices that gather and exchange data autonomously. Deploying loT networks at scale may introduce several challenges related to network congestion, duplicate communications, device discovery, advertising packet collisions, and connection management. For example, without a coordinated broadcasting mechanism, ESLs may transmit their advertising messages simultaneously or within overlapping intervals. This uncoordinated transmission results in collisions, while a gateway or an access point, may fail to detect or decode these advertising messages, rendering the initial communication attempt unsuccessful. On the gateway side, the lack of coordinated scanning among multiple gateways leads to additional inefficiencies.

The connectivity issues are particularly pronounced with devices using the Bluetooth 5.4 standard, which includes protocols such as Periodic Advertising with Responses (PAwR). The PAwR protocol, designed for efficient communication, is restricted by the high-density conditions as PAwR relies on precise synchronization. When advertising messages repeatedly collide or are missed by uncoordinated gateways, the already complex synchronization process becomes increasingly time-consuming. The delay obstructs ESLs from quickly synchronizing and participating in subsequent tasks, affecting real-time responsiveness and hindering operational efficiency.

To address these issues, systems, devices, and methods for managing and coordinating high-density loT networks are provided in the present disclosure. The system provides for sitewide coordination of the network within system 100. In an embodiment, the sitewide coordination can be provided by an edge connect module instance located in one or more gateways, where the gateways are connected to a cloud configuration server for centralized coordination. The edge connect module also provides for inter-gateway data exchange to synchronize the coordinated operation. In another embodiment, one or more gateways are connected to a sitewide controller. The sitewide controller includes an edge connect module instance that provides for unified configuration management, data aggregation, and synchronized network operation. The sitewide controller enables centralized monitoring and control over all connected gateways, allowing for real-time adjustments to network parameters, load balancing, and seamless device assignments, such as handoffs. The sitewide controller can be connected to a server layer. Additionally, the sitewide controller can aggregate network health and device monitoring data across the deployment, supporting predictive maintenance, adaptive resource allocation, and coordinated responses to network events. The coordination allows for the dynamic aggregation, filtering, and synchronization of data, reducing packet collisions, mitigating duplicate connections, and improving network efficiency. The disclosed system can leverage edge computing functionality within gateways to perform real-time processing tasks, minimizing latency by handling device management operations locally and reducing reliance on cloud resources for time-sensitive activities.

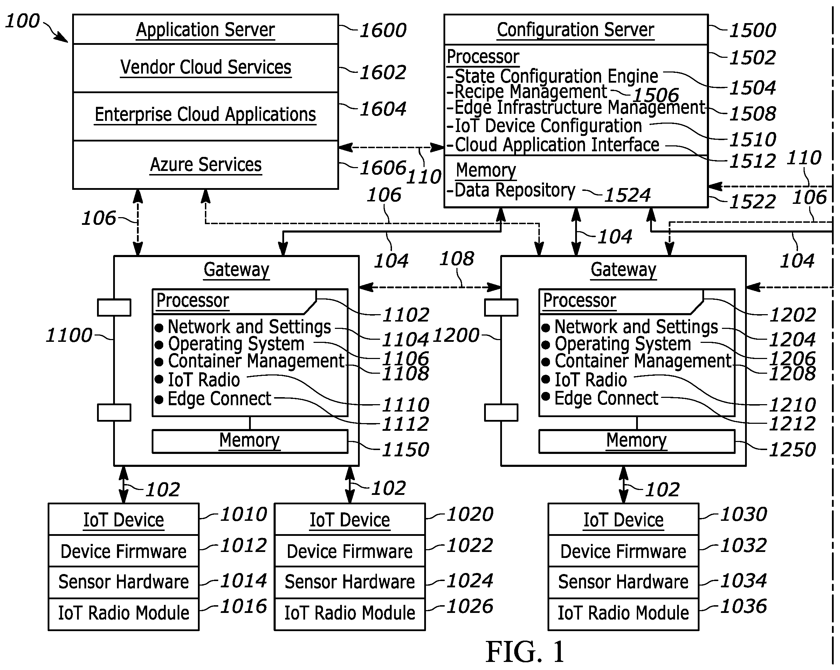

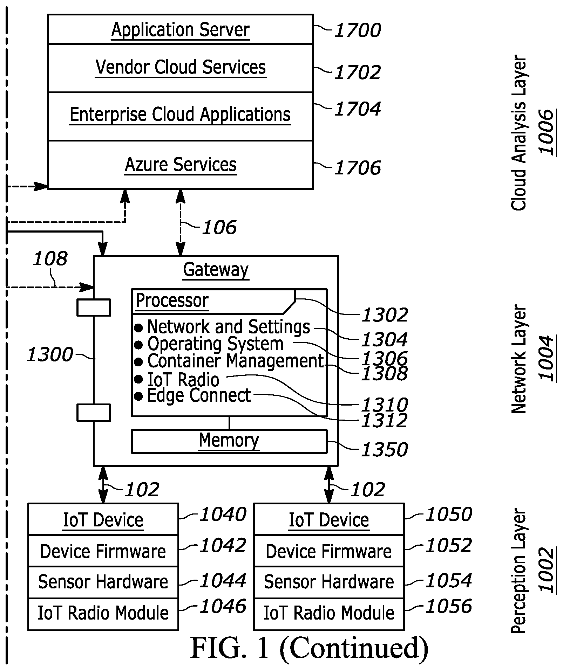

Referring now to FIG. 1, shown therein is an illustrative diagram of the loT network system 100, according to an embodiment.

The embodiments disclosed herein include a system 100 for the management and coordination of loT devices within a multi-layer network. The system 100 includes loT devices 1010, 1020, 1030, 1040, 1050 and gateways 1100, 1200, 1300. The gateways 1100, 1200, 1300 operate as intermediary nodes between the perception layer 1004 and the cloud analysis layer 1006. The loT devices 1010, 1020, 1030, 1040, 1050, which include hardware and firmware components, communicate over wireless protocols, such as Bluetooth Low Energy (BLE) or Zigbee, to transmit environmental data to the gateways 1100, 1200, 1300. The gateways 1100, 1200, 1300 can perform local processing, coordination, and aggregation of sensor data, functioning on the edge within the network. The gateways 1100, 1200, 1300 further communicate with cloud servers 1500, 1600, 1700 deployed in a cloud computing platform.

In an embodiment, the processing, coordination, and data aggregation can occur at the gateways 1100, 1200, 1300. Alternatively, the processing, coordination, and data aggregation can occur at the configuration server 1500, with real-time instructions transmitted to the gateways 1100, 1200, 1300 for synchronized operation and responsive network management.

The system 100 includes a perception layer 1002. The perception layer 1002 includes a plurality of end-point devices 1010, 1020, 1030, 1040, and 1050 (also referred to as sensors or loT devices). In an embodiment, the end-point devices 1010, 1020, 1030, 1040, and 1050 are provided to collect environmental data or monitor specific conditions. The loT devices are illustrative, and a reference to one loT device, such as loT device 1010, may also refer to other devices, such as loT devices 1020, 1030, 1040, or 1050. The loT devices are not limited to the specific numbers shown in the figures. In various embodiments, there can be more or fewer loT devices installed based on the requirements of the system 100. The loT devices may include a variety of components such as temperature sensors, Electronic Shelf Labels (ESLs), thermometers, accelerometers, optical scanners, and moisture detectors, as well as other specialized hardware such as actuators.

Additionally, the reference to the subcomponents of one loT device can refer to the corresponding subcomponents of one or more other loT devices. For example, a reference to an operation performed by device firmware 1012 of loT Device 1010 can refer to a similar process executed by device firmware 1022 of IoT Device 1020, device firmware 1032 of loT Device 1030, device firmware 1042 of loT Device 1040, or device firmware 1052 of loT Device 1050. Similarly, a reference to the sensor hardware 1014 of IoT Device 1010 can mean to include sensor hardware 1024 of loT Device 1020, sensor hardware 1034 of loT Device 1030, sensor hardware 1044 of loT Device 1040, or sensor hardware 1054 of loT Device 1050. Further, a reference to the loT radio module 1016 in loT Device 1010 can refer to similar operations carried out by loT radio module 1026 of loT Device 1020, loT radio module 1036 of loT Device 1030, loT radio module 1046 of loT Device 1040, or loT radio module 1056 of loT Device 1050. A subcomponent, while part of distinct loT devices, may perform equivalent operations for coordinated functionality across the entire network system 100.

The perception layer 1002 operates over a perception layer network 102, enabling loT devices 1010 to transmit loT device data to the network layer 1004. A plurality of protocols can be employed within the perception layer 1002, depending on the specific implementation and deployment requirements.

In an embodiment, the perception layer network 102 provides lightweight, low-power wireless protocols for energy-efficient communication. Bluetooth Low Energy (BLE) may be used for short-range connections, allowing sensors to send loT device data with minimal energy consumption. In larger deployments, Zigbee may be utilized to create mesh networks. For deployments requiring long-range communication with low data rates, LoRa (Long Range) can be used. The protocols can be selected based on factors such as density of loT devices, coverage area, and network topology to ensure optimal communication.

In an embodiment, the loT devices within the perception layer 1002 connect with one or more gateways 1100, 1200, 1300 through the perception layer network 102. The perception layer network 102 may also support adaptive mechanisms such as dynamic frequency selection or channel hopping to minimize interference. In an embodiment, the perception layer 102 provides local data buffering within the loT devices 1010, to mitigate data loss during brief network interruptions.

In an embodiment, the perception layer network 102 provides local wireless communication between loT devices 1010, 1020, 1030, 1040, 1050 and gateways 1100, 1200, 1300. The perception layer network 102 enables the bidirectional exchange of data, allowing loT devices 1010 to send loT device data and receive gateway data from gateways 1100, 1200, 1300. In an embodiment, loT devices 1010 such as Electronic Shelf Labels (ESLs) may receive gateway data including display content data. For loT devices 1010 including actuators, the gateway data may include control data causing the loT devices 1040 to perform specific actions, such as turning off a valve or adjusting environmental settings. The protocol used on network 102 may vary depending on the type of loT device 1010. All of the loT devices 1010 within the same system 100 may not operate on the same protocol. Different protocols may be selected based on the range, power consumption, and network topology requirements of the specific loT device type or deployment environment.

The loT device data transmitted over network 102 may include sensor data. For example, a temperature sensor may transmit a sensor data including a temperature reading such as 23°C. A leak sensor might transmit a sensor data including a "Leak detected" status signal. For an energy meter IoT device 1010, the loT device data may include energy consumption data at periodic intervals. The loT device data may include metadata. The metadata may include a unique sensor ID, timestamp, and battery status, to provide contextual information for further processing at the gateway 1100. The packet format of the loT device data depends on the protocol being used. For example, BLE data packets may follow the structure defined in the BLE advertising or connection protocol.

In an embodiment, security mechanisms are implemented for transmissions over the perception layer network 102. The security mechanisms may include authentication tokens or session identifiers in the loT device data packets to verify the authenticity of the transmitting loT devices 1010. Lightweight security protocols, configured for loT devices 1010 with limited processing capacity, can be installed for security and efficiency. The lightweight security protocols can include Elliptic Curve Cryptography (ECC) providing strong encryption with smaller keys. The lightweight security protocols can include DTLS (Datagram Transport Layer Security) for securing datagrams with minimal latency. In an embodiment, symmetric encryption including AES-128 and pre-shared keys may be used with the loT device data packets to provide efficient, secure communication without incurring the processing demands typical of more complex security frameworks.

In an embodiment, loT devices 1010, can include additional components beyond sensors to perform specialized operations. The components may include actuators, drivers, display modules, data simulators, relays, and controllers. For example, ESLs within the loT devices 1010 may utilize LED displays, LCD panels, or e-paper displays to present display content data (included in the gateway data) received from the gateways 1100 over the perception layer network 102. Actuators included in the loT devices 1010 may receive control data (included in the gateway data) to perform actions such as adjusting lighting, opening valves, or triggering alarms based on those instructions. Additional firmware drivers, signal converters, and power modules may be included in the loT device's 1010 to manage device operations and connectivity.

In an embodiment, the loT device 1010 includes device firmware 1012 configured to govern the internal operations of the loT device 1010 including managing tasks such as data collection, communication, and control logic. The loT device 1010 includes sensor hardware 1014 that can vary depending on the use case and may include temperature sensors, optical cameras, moisture detectors, motion sensors, or other specialized hardware to detect environmental or operational conditions. The loT device 1010 includes loT radio module 1016 configured to enable wireless communication over the perception layer network 102, using protocols such as BLE, Zigbee, or LoRa. In an embodiment, power modules may be included in loT device 1010 to manage energy consumption.

In an embodiment, specific modules may be implemented within loT device(s) 1010 to carry out distinct functions and generate data to be included in the loT device data. For example, a sensor module (not shown) may collect sensor data. A firmware module (not shown) may execute operations based on firmware control data configured to manage software functions. A radio module (not shown) may receive or transmit radio communication data through protocols such as BLE or Zigbee. An actuator module (not shown) may respond to control data sent from the gateway 1100, executing physical actions such as opening valves or adjusting lighting. Alternatively, a single processor within the loT device 1010 may be configured to perform the tasks of one or more modules, depending on the device architecture and design.

The loT device 1010 may include simulator components configured to generate simulated data, replicating specific environmental conditions or sensor outputs to enable testing or calibration. The simulated data can be included in the loT device data. This simulated data can emulate temperature values or leak detection statuses to validate device performance without requiring actual environmental input. Additionally, the loT device 1010 may include readers configured to interpret external data from sources such as barcodes, RFID tags, or optical scanners.

The loT network system 100 includes a network layer 1004 (also referred to as the intermediate network layer 1004). The intermediate network layer 1004 operates as a communication bridge between the perception layer 1002, which includes loT devices 1010, and the cloud analysis layer 1006. The intermediate network layer 1004 provides for seamless bidirectional data exchange by routing loT device data and gateway data. The intermediate network layer 1004 can communicate on local wireless protocols, such as BLE, Zigbee, or LoRa, to receive loT device data from the loT devices 1010. The loT device data is then aggregated at the gateway level and transmitted over local area networks (LANs) or secure internet connections to the cloud systems in the cloud analysis layer 1006 for further analysis and management.

The gateways 1100, 1200, and 1300 can provide for data aggregation by routing and collecting loT device data from the loT devices 1100. The aggregated inter-gateway data can be transmitted by the gateway 1100 to another gateway 1200 or 1300. The cloud-directed data can be transmitted by the gateway 1100 to cloud analysis layer 1006. By aggregating multiple data streams from the perception layer 1002, the intermediate network layer 1004 reduces the number of independent transmissions to the cloud analysis layer 1006.

The intermediate network layer 1004 provides bidirectional communication between the loT devices 1010 and the gateways 1100. Further, the intermediate network layer 1004 provides bidirectional communication between the gateways 1100 and the servers 1500, 1600, 1700. The gateways 1100, 1200, 1300 can transmit control data (included in the gateway data) to the loT devices, such as Electronic Shelf Labels (ESLs) or actuators.

The gateways 1100, 1200, and 1300 are configured to communicate with heterogeneous devices within the same network. The gateways 1100, 1200, and 1300 can also perform protocol translation to provide interoperability between loT devices using different communication protocols, such as BLE, Zigbee, and LoRa. The gateways 1100, 1200, and 1300 may also harmonize the protocols by translating loT device data formats into a standard cloud-compatible format. The gateways 1100, 1200, and 1300 can implement local communication management processes to minimize interference and coordinate scanning parameters across multiple gateways. Network optimization techniques are provided in this disclosure to reduce packet collisions, manage data congestion, and improve overall latency. The gateways can distribute the communication load evenly across loT devices 1010 to prevent overload on any individual gateway.

In an embodiment, the intermediate network layer 1004 implements security mechanisms to protect data and provide trusted communication between system components. Gateways 1100, 1200, and 1300 may apply encryption protocols, such as TLS or AES, to secure the transmission of cloud directed data over network 104.

The intermediate network layer 1004 includes gateways 1100, 1200, and 1300. The gateways are not limited to the specific numbers shown in the FIG. 1. There may be fewer or more gateways in the system 100, depending on the deployment requirements. The gateways are illustrative, and a reference to one gateway, such as gateway 1100, the description may also refer to other gateways, such as gateways 1200 or 1300.

Additionally, a reference to a subcomponent of one gateway, such as gateway 1100, can refer to corresponding subcomponents in other gateways within the network layer 1004. The processor 1102 and memory 1150 in gateway 1100 can perform processing and storage operations and may refer to similar functions executed by processor 1202 and memory 1250 in gateway 1200 or processor 1302 and memory 1350 in gateway 1300. For example, a reference to network and settings 1104 in gateway 1100 can refer to similar operations performed by network and settings 1204 in gateway 1200 or network and settings 1304 in gateway 1300. Similarly, a reference to the operating system 1106 in gateway 1100 may also refer to operating system 1206 in gateway 1200 or operating system 1306 in gateway 1300. A reference to the loT radio 1110 in gateway 1100 can refer to corresponding operations carried out by loT radio 1210 in gateway 1200 or loT radio 1310 in gateway 1300. Further, the container management 1108 in gateway 1100 may represent similar processes performed by container management 1208 in gateway 1200 or container management 1308 in gateway 1300. Furthermore, edge connect module 1112 in gateway 1100 can correspond to edge connect module 1212 in gateway 1200 or edge connect module 1312 in gateway 1300. A subcomponent, while integrated into distinct gateways, may perform equivalent functions for coordinated operations across the entire network system 100.

Additionally, any processes, operations, or functions attributed to a specific component of the gateway 1100 may be performed through the execution of the data generated by that component. Furthermore, the processes, operations, and configurations associated with the components of the gateway 1100 may be executed as steps in a method for achieving the described functionality.

The gateways 1100 act as intermediary network processing nodes between loT devices in the perception layer 1002 and higher-level systems within the cloud analysis layer 1006, such as cloud platforms, enterprise applications, or vendor-specific services. The gateways 1100 are configured to receive loT device data from loT devices 1010. Additionally, gateways 1100 provide protocol translation to convert the protocols used by loT devices 1010 for local communication, such as BLE, Zigbee, or LoRa, are converted into internet-based upstream protocols, such as MQTT or HTTPS, that are compatible with cloud systems in the cloud analysis layer 1006. Upon aggregation, the gateways 1100 generate and transmit cloud-directed data to the cloud analysis layer 1006 using protocols such as MQTT or HTTPS. In the translation, loT device data collected using local protocols is reformatted into cloud-directed data compatible with upstream systems. The gateways 1100 can perform local data processing to generate control data and display content data, included within the gateway data sent to loT devices.

The gateways 1100 can implement edge computing functions to perform local filtering, aggregation, and some degree of data analysis. By processing data at or near the point of origin, gateways reduce network latency and conserve bandwidth by minimizing the amount of data transmitted to the cloud.

In an embodiment, the gateway processor 1102 includes a network and settings component 1104. The network and settings component 1104 can generate network configuration data to execute the operations attributed to the component 1104. The network configuration data is included within the gateway data generated at the gateway level. Alternatively, the network configuration data can be referred to as gateway data directed to operations performed by the network and settings component 1104. The gateway 1100 may include a dedicated network and settings module to execute the described functions of the network and settings component 1104. Alternatively, the processor 1102 can be configured to perform network and settings functions.

In an embodiment, the network and settings component 1104 is configured to manage network parameters, communication protocols, and device settings. The network and settings component 1104 provides the assignment of IP (internet protocol) addresses, configuration of communication windows, configuring routing tables, and management of scanning intervals. The network configuration data can include routing tables for seamless data flow between devices, gateways, and cloud systems.

In an embodiment, the network and settings component 1104 can implement encryption protocols to secure loT device data, gateway data, and cloud-directed data. The network and settings component 1104 manages secure keys, certificates, or authentication tokens used for device communication and protocol handshakes. For wireless networks, the network and settings component 1104 adjusts channel selection and frequency hopping patterns to minimize interference. The network and settings component 1104 can enforce network policies by generating firewall data and access control data (such as ACLs) to restrict unauthorized access.

The network and settings component 1104 can also support dynamic network data management, such as IP address management using DHCP or static addressing. For larger networks, the network and settings component 1104 enables VLAN segmentation to separate traffic streams and optimize communication flow. The network and settings component 1104 is configured to synchronize with time servers to provide accurate timestamps, supporting timestamped communication data for logging and monitoring.

In an embodiment, the network and settings component 1104 interacts with network discovery protocols (e.g., mDNS or UPnP) to identify new loT devices and process loT device onboarding. The network and settings component 1104 can also implement Quality of Service (QoS) policy data received from the configuration server 1500 to prioritize specific types of traffic, such as real-time sensor alerts, over non-critical data streams. The configuration settings maintained by the network and settings component 1104 may be coordinated locally with other gateways 1200, 1300 on the network 108. Alternatively, the configuration settings can be synchronized with cloud systems in the cloud analysis layer 1006 for consistency across gateways 1100. The network configurations can also include backup profiles that allow the gateway to switch to alternate communication settings during network disruptions, ensuring continuous connectivity.

In an embodiment, the gateway processor 1102 includes an operating system component 1106. The operating system component 1106 can generate resource management data to execute the operations attributed to the component 1106. The resource management data is included within the gateway data generated at the gateway level. Alternatively, the resource management data can be referred to as gateway data directed to operations performed by the operating system component 1106. The gateway 1100 may include a dedicated operating system module to execute the described functions of a operating system component 1106. Alternatively, the processor 1102 can be configured to perform operating system functions.

The operating system component 1106 provides for the synchronized operation of network drivers, security protocols, and software modules. The gateway data generated by the operating system component 1106 enables the scheduling of threads and prioritization of tasks based on real-time conditions. The operating system component 1106 provides for the efficient allocation of CPU cycles, such that critical operations including packet forwarding and protocol translation, are executed without delay. Lower-priority tasks, such as background monitoring, are scheduled according to the process management data. The operating system component 1106 can also implement interrupt handling routines, to instruct the processor 1102 to respond immediately to time-sensitive events, such as incoming loT device data packets from loT devices 1010.

The operating system component 1106 may provide for management of the memory 1150. The operating system component 1106 can allocate and deallocate memory blocks dynamically to provide that processes running on the gateway 1100 have the necessary resources while avoiding memory conflicts. In an embodiment, the operating system component 1106 manages a virtual memory system, swapping data between physical memory and storage to optimize performance under varying workloads. The memory 1150 can further include generation and maintenance of logs, enabling monitoring and diagnostics of gateway activities.

In an embodiment, the gateway processor 1102 includes a container management component 1108. The gateway 1100 may include a dedicated container management module to execute the described functions of a container management component 1108. Alternatively, the processor 1102 can be configured to perform container management functions.

The container management component 1108 is configured to provide for the deployment, execution, and management of containerized applications within the gateway 1100. The container management component 1108 also provides for resource isolation such that the container(s) operates independently to avoid conflicts. The container deployment data allocates CPU cycles, memory, and storage resources to individual containers. The container management component 1108 may also define namespaces and control groups (cgroups) to monitor resource consumption in real time. If a container underperforms or encounters errors, the container management component 1108 causes the gateway 1100 to restart or replace the container without impacting the overall system 100.

In another embodiment, the container management component 1108 supports the deployment of Snaps or the self-contained software packages. Snaps can bundle all required dependencies with the application providing consistency across different environments and minimizing compatibility issues. The component 1108 can provide Snapcraft tooling to manage the installation, update, and rollback of Snaps. Snaps can be deployed in read-only mode to maintain system integrity, with designated data or configuration areas being writable.

The container management component 1108 can execute orchestration features to manage the lifecycle of multiple containers by scheduling their start, stop, and restart processes based on predefined triggers or performance conditions. The component 1108 can provide that containers operate autonomously but remain synchronized with system 100 operations. For example, if a firmware update is deployed as a container, the orchestration component 1108 may initiate the update at a low-traffic interval to avoid service disruption. In some implementations, the component 1108 communicates with external container registries to pull updated container images and ensure the gateway 1100 always runs the latest, secure versions of its software modules.

In an embodiment, the gateway processor 1102 includes an loT radio 1110. The gateway 1100 may include a dedicated loT radio module to execute the described functions of the loT radio. Alternatively, the processor 1102 can be configured to perform loT radio functions. The loT radio 1110 provides for wireless connectivity with loT devices 1010 over protocols such as BLE, Zigbee, LoRa, or Wi-Fi. The IoT radio 1110 scans for incoming advertising packets from loT devices 1010 and transmits data between the loT devices 1010 and the gateway 1100 over network 102. The loT radio 1110 can operate in either or both broadcast and connection-oriented modes, enabling communication with multiple devices simultaneously. The loT radio 1110 may also manage frequency hopping and signal strength thresholds to avoid interference and ensure reliable connectivity. The loT Radio 1110 is configured to adjust transmission power levels dynamically based on proximity to devices to conserve energy. In an embodiment, the loT Radio 1110 provides for synchronizing connection intervals with the devices it communicates with, providing efficient packet transmission and minimizing collisions.

The loT radio 1110 can provide adaptive channel selection to mitigate interference from co-located networks. The loT radio 1110 supports dynamic power adjustments based on proximity to devices, conserving energy. In dense environments where multiple wireless devices operate simultaneously, the loT radio 1110 can dynamically shift transmission frequencies to avoid congested channels. The loT radio 1110 can perform real-time monitoring of spectrum activity and adjusting the operating frequency based on interference levels. The loT radio 1110 may implement spread-spectrum techniques, such as frequency hopping spread spectrum (FHSS), to improve signal stability by transmitting small portions of data across multiple channels within a short interval. In an embodiment, the loT radio 1110 provides for real-time spectrum monitoring and executing spread-spectrum techniques, such as FHSS, to improve signal stability and ensure uninterrupted communication.

The loT radio 1110 further supports multi-protocol communication by managing protocol stacks corresponding to a plurality of IoT standards, such as BLE, Zigbee, or LoRa, allowing the gateway 1100 to connect with heterogeneous loT devices 1010. The loT radio 1110 can operate in simultaneous multi-channel modes, enabling it to communicate with devices across different protocols concurrently. In an embodiment, the loT radio 1110 provides timing synchronization mechanism to enable that communication windows align with loT devices 1010 to reduce latency and minimize retransmissions due to missed packets. In an embodiment, the loT radio 1110 provides for optimizing packet delivery using SNR thresholds and encrypted radio-level communication to protect wireless transmissions from unauthorized access.

In an embodiment, loT device discovery and authentication are initiated by the loT radio 1110 within the gateway 1100 through the scanning of advertising messages from loT devices 1010. The advertising messages may be included in the loT device data generated by the loT devices 1010. In an embodiment, the loT devices 1010 are BLE-enabled devices. The advertising packets can be transmitted over multiple BLE channels, with the radio 1110 switching across these channels during a predefined scanning parameter(s) to ensure no device broadcast is missed.

In an embodiment, when a new BLE IoT device initiates communication, the BLE loT device transmits advertising packets as part of the loT device data over designated BLE channels in the network 102. Upon detecting an advertising packet, the loT radio 1110 extracts information such as the BLE loT device's unique identifier and service data. The loT radio 1110 then initiates a connection request to the BLE loT device, signaling the intent to establish a connection. The BLE loT device responds, and the gateway completes the handshake by assigning connection parameters, including connection intervals and supervision timeouts, to manage the ongoing communication. Once the connection is established, the gateway 1100 synchronizes with the BLE loT device to maintain communication and provide stable data exchange.

The BLE standard can provide support for three distinct communication topologies to accommodate varying network needs and power efficiency requirements among loT devices 1010 or between an loT device 1010 and the gateway 1100. First, BLE allows for one-to-one communication between devices in a connection-oriented mode. In this mode, a stable connection is established between devices to facilitate ongoing data exchange. Second, BLE enables one-to-one communication in a connectionless mode, where data packets are transmitted without the establishment of a persistent connection, allowing for quicker interactions and conserving power. Finally, BLE supports a one-to-many communication topology in a connectionless broadcast mode, where a single device can transmit data simultaneously to an unlimited number of receiving devices. This broadcast mode further enables mesh networking capabilities, which provide for the interconnection of tens of thousands of devices in a scalable and distributed communication framework.

In BLE networks, devices can be assigned asymmetrical roles based on their power availability and functional responsibilities to optimize energy consumption across the network. Devices with larger, more reliable power sources, such as those powered by substantial batteries (e.g., smartphone batteries) or a wired power connection, handle tasks that demand higher energy usage. These tasks may include managing extensive data exchanges, maintaining consistent broadcasts, or acting as primary communication nodes in the network. Conversely, IoT devices operating on smaller power supplies, such as those using point cell batteries, are assigned roles that prioritize low-energy consumption, performing less power-intensive tasks to extend their operational lifespan within the network.

Version 5.4 of the BLE standard supports Periodic Advertising with Responses (PAwR), which provides for bidirectional communication between gateways 1100 and large numbers of loT devices 1010 in a centralized, star topology. The PAwR feature enables a single gateway, such as gateway 1100, to receive cloud-directed data from, and transmit gateway data to, hundreds or even tens of thousands of loT devices 1010. By incorporating PAwR into the communication protocol, the gateway 1100 can manage synchronized communication with large-scale loT deployments without the need for individual connections to other device(s), providing efficient data exchange across the perception layer 1002.

The PAwR feature utilizes two core elements of the BLE standard: extended advertising and periodic advertising. In extended advertising, an advertising loT device 1010 transmits loT device data as advertising packets over one or more of the three advertising channels defined by the BLE standard. The extended advertising packets may not include advertising data. Instead, the advertising packets include an auxiliary packet pointer that directs the gateway 1100 to secondary advertising channels where secondary advertising packets are transmitted. The auxiliary packet pointer also provides timing information, allowing the gateway 1100 to locate these secondary advertising packets. These secondary packets can include larger amounts of data than conventional advertising packets, supporting the transmission of multiple data segments through "chained" packets.

In an embodiment, periodic advertising enables a gateway 1100 to synchronize with a continuous sequence or "train" of advertising packets transmitted by loT devices 1010. The gateway 1100 first identifies and processes secondary advertising packets during the extended advertising phase. The timing information included in the secondary advertising packets allows the gateway 1100 to align with the timing of the periodic advertising train, enabling it to anticipate the arrival of subsequent packets. This synchronization provides the gateway 1100 with consistent intervals for receiving loT device data from, and transmitting gateway data to, loT devices 1010 over network 102, providing efficient management of large-scale device communications while minimizing latency and packet loss.

In an embodiment, the PAwR feature supports scalability by allowing multiple loT devices 1010 to communicate with the gateway 1100 using synchronized time slots. An loT device 1010 can be assigned a specific time slot to transmit or receive data, reducing collision and ensuring orderly communication. The gateway 1100 can thus manage communication with numerous devices in a structured manner, providing for seamless data flow in environments where thousands of devices operate simultaneously. This feature provides that the gateway 1100 maintains an organized communication protocol with the connected loT device(s), aligning data transmission times with the periodic advertising schedule to provide reliable data exchange across the system 100.

In an embodiment, the gateway processor 1102 includes edge connect module 1112 (also referred to as gateway coordination and edge management component 1112 or edge module 1112). The edge connect module 1112 can generate edge configuration data to execute the operations attributed to the edge module 1112. Alternatively, the edge configuration data can be referred to as gateway data directed to operations performed by the edge module 1112. The gateway 1100 may include a dedicated edge module to execute the described functions of the edge module 1112. Alternatively, the processor 1102 can be configured to perform edge connect module 1112 functions.

In an embodiment, the edge connect module 1112 is configured to manage device connections, device assignments, and resource allocation across multiple gateways. Upon receiving an advertising message, the edge connect module 1112 can extract the loT device data, including the payload data, the unique device identifier, service UUIDs, and security tokens embedded in the packet of the loT device data. The edge connect module 1112 is configured to provide for load balancing, distributing communication traffic evenly across gateways to avoid congestion. Additionally, the edge management functions include filtering, aggregating, and de-duplicating data received from multiple loT devices 1010. The edge connect module 1112 may also execute local rules or event triggers to perform actions at the edge, reducing the need for cloud-based decisions. In an embodiment, the edge connect module 1112 is configured to provide for synchronization with cloud platforms on the cloud analysis layer 1006 by managing device configurations and reporting status updates through network 104.

In an embodiment, the edge connect module 1112 is configured to provide dynamic device onboarding and authentication by managing the exchange of keys and credentials during the initial connection phase. The feature provides that authorized loT devices 1010 can establish connections with the gateway 1100. The edge connect module 1112 can receive the health and availability of connected devices and gateways. In the event of a gateway failure or device timeout, the edge connect module 1112 can initiate failover procedures to reconnect devices to alternative gateways, such as 1200 or 1300.

The edge connect module 1112 can implement predictive algorithms to anticipate potential congestion in communication traffic based on current usage patterns and historical data. In an embodiment, the edge connect module 1112 manages virtual addressing schemes by assigning virtual MAC addresses (vMACs) to devices and gateways. The virtual addressing supports seamless roaming across multiple gateways 1100, 1200, and 1300 without requiring the loT device to reestablish security sessions or reconfigure communication settings. Additionally, the edge connect module 1112 may perform local data retention in the memory 1150 to store the device-generated events temporarily in case of cloud connectivity loss, and forwarding the data once the connection to the cloud over network 104 is restored.

In an embodiment, the edge connect module 1112 provides for local monitoring and control. The edge connect module 1112 may continuously monitor the status of connected loT devices 1010 in real time by collecting data packets in the loT device data transmitted through the loT radio 1110. In an embodiment, the data packets are processed locally by analyzing device status indicators included in the loT device data. The device status indicators include sensor readings, battery levels, and connectivity states. The edge connect module 1112 can compare the device status indicators against preconfigured thresholds or rules to detect anomalies or trigger specific actions as described below.

In an embodiment, when the edge module 112 identifies a trigger condition from the loT device data requiring immediate action, the edge module 112 transmits control commands in the edge configuration data to the relevant loT device 1010 through the local network 102. For example, if the data received from a sensor indicates an abnormal temperature, the edge module 112 may trigger an actuator connected to the gateway 1100 to open a valve or adjust a thermostat. The execution of the control tasks may bypass the cloud layer to minimize latency and ensure fast response times. The edge configuration data performs control tasks by executing commands to loT devices through the local network 102.

In an embodiment, the edge connect module 1112 triggers event-driven actions based on real-time loT device data received from connected loT devices 1010, such as sensors or actuators. The pre-configured rules, stored locally in the memory 1150, define specific actions for various conditions. For example, if a connected leak sensor detects water, the edge connect module 1112 may immediately trigger a valve actuator to shut off water flow, preventing further damage. The rules can be executed locally by the edge connect module 1112 for low-latency response, bypassing the need for cloud intervention.

The gateway 1100 maintains event triggers and local rules for specific scenarios, stored within the memory 1150. The event triggers and local rules can be included in the configuration data generated by the configuration server 1500 based on user instructions. The configuration server 1500 transmits the configuration data to the gateway 1100. The configuration data may include adding new triggers, modifying thresholds, or adjusting actions tied to specific events. The operating system component 1106 provides that the updated rules are synchronized without disrupting ongoing operations, applying the changes in real-time or during low-traffic intervals. The event triggers allow the edge connect module 1112 to initiate actions autonomously based on predefined conditions. In an embodiment, configuration data can be received in real time from a user through the configuration server 1500 connected to the gateway 1100. In an embodiment, the edge configuration data generated by the edge connect module 1112 initiates actions autonomously based on predefined conditions and event triggers stored in the memory 1150. The event triggers may include commands such as updating ESL displays with new pricing, adjusting thermostat settings for temperature control, or activating lighting systems based on store occupancy. The gateway 1100 processes and relays the event triggers to the relevant loT devices 1010 through network 102 for immediate execution. The event triggers can also include complex workflows, such as triggering multiple actuators or generating alerts for specific stakeholders when certain thresholds are breached.

The loT radio 1110 captures raw data packets from the loT device data over network 102, including sensor readings and device status updates. The edge connect module 1112 can apply filtering algorithms to eliminate unnecessary or redundant information. For example, the edge connect module 1112 can discard packets that contain repeated sensor data within a short time frame or data that falls outside of predefined ranges. The aggregation process combines multiple readings in the loT device data, such as hourly temperature averages, into consolidated data sets to minimize transmission size and reduce bandwidth consumption.

The edge connect module 1112 can also perform de-duplication by identifying and removing duplicate messages received from multiple gateways and IoT devices to provide a clean dataset before transmission to the cloud analysis layer 1006 over network 104. The edge connect module 1112 can compare packet identifiers, timestamps, and device IDs to detect redundant entries in the loT device data and gateway data.

During protocol translation, the edge connect module 1112 can convert loT device data received from loT devices 1010 in formats specific to BLE, Zigbee, or LoRa into internet-based protocols such as MQTT or HTTPS for the cloud analysis layer 1006. Further, the edge connect module 1112 can convert incoming configuration data from the cloud analysis layer 1006 to conform to the syntax and timing requirements of BLE or Zigbee protocols before transmitting the configuration data to loT devices 1010. The edge connect module 1112 can also apply security measures, such as reformatting payloads with encryption headers, providing that the translated data remains consistent with security policies during transmission.

In an embodiment, the edge connect module 1112 provides for load balancing and resource management across multiple gateways, such as gateway 1100, 1200, and 1300. The edge connect module 1112 can dynamically monitor traffic loads, device connections, and resource availability across the gateways, providing that communication is evenly distributed.

The edge connect module 1112 can provide resource management by maintaining routing tables and scanning intervals for gateway(s), allowing the configuration server 1500 to reassign devices or communication streams to alternative gateways based on the reassignment rules in the configuration data. Alternatively, the reassignment rules may be stored locally in the gateways 1100. When a device, such as loT device 1010, establishes a connection, the edge connect module 1112 can evaluate real-time network conditions to determine the optimal gateway. If one gateway becomes congested, the edge connect module 1112 can initiate a device assignment to another gateway without interrupting the loT device's communication. In an embodiment, the edge configuration data can trigger a device assignment to another gateway.

In an embodiment, the gateway 1100 communicates with the configuration server 1500 and application servers 1600, 1700 over the network 104. The cloud-directed data is generated and transmitted by the gateways 1100 to the configuration server 1500 and application servers 1600, 1700. The configuration data is generated and transmitted by the configuration server 1500 to the gateways 1100. The application data is generated and transmitted by the application servers 1600, 1700 to the gateways 1100. User terminals (not shown) can be connected to the configuration server 1500 and application servers 1600, 1700 to receive data for a bidirectional exchange of data between the users and the cloud servers. User terminals may include personal computers, PDAs, smartphones, tablets, or other mobile and desktop computing devices that allow users to access and interact with the network's management and monitoring interfaces.

In an embodiment, the edge connect module 1112 implements predictive routines to anticipate future congestion based on historical traffic patterns generated from loT device data. The predictive routines provide resource reallocation by offloading specific loT devices to less-burdened gateways during peak periods. The predictive routines and resource quotas are included in the configuration data received from the configuration server 1500. The configuration data can be received in real time from the configuration server 1500 or stored locally at the gateways 1100. The resource quotas regulate container management within the gateways, prioritizing critical processes over non-essential processes to maintain operational efficiency.

In an embodiment, the edge connect module 1112 manages firmware and configuration updates for connected loT devices 1010. The configuration data received from the configuration server 1500 can include firmware and configuration updates. The updates may be cached locally at the gateway 1100 to provide availability for deployment during optimal windows based on network traffic, device status, and resource availability. In an embodiment, rollback mechanisms can be implemented by the edge module 1112, providing that if an update fails, the gateway 1100 reverts the device to a previous stable firmware version. Status reports for the update(s) can be sent back to the configuration server 1500 by the gateway 1100 in the cloud-directed data.

In an embodiment, the edge connect module 1112 establishes third-party cloud integration with external platforms, such as third-party application servers 1600 and 1700. The gateway 1100 receives application data from the application servers on the cloud analysis layer 1006. The application data includes application commands, alerts, and triggers, which initiate actions at the edge connect module 1112 or loT devices 1010. For example, the application data may include instructions to adjust thermostat settings or update ESL displays. The application data can be stored locally at the gateways 1100 to allow repeated execution without requiring additional instructions from the cloud. Alternatively, real-time instructions within the application data may be provided to address immediate operational needs.

In an embodiment, the cloud-directed data transmitted by the gateways 1100 to the application servers 1600 and 1700 may include processed loT device data. The processed loT device data includes sensor data, such as temperature readings, leak detection statuses, and energy consumption values. The processed loT device data may further include metadata, unique sensor IDs, timestamps, and battery levels.

In an embodiment, the gateway 1100 receives application data from the third-party application servers 1600 and 1700. The application data may include firmware patches, new operating parameters, or control instructions for target loT devices 1010. The edge connect module 1112 may perform interactions with third-party platforms by running custom vendor-provided agents to handle specific data-processing tasks or protocol translation at the edge.

In an embodiment, the network 108 operates within the network layer 1004, providing communication between gateways 1100, 1200, and 1300. The inter-gateway data is transmitted among the gateways. The inter-gateway data provides that connected loT devices 1010, 1020, 1030, 1040, and 1050 remain continuously operational, even when transitioning between different gateway coverage areas. The inter-gateway data supports the exchange of information between gateways 1100 to manage device assignments and load distribution. The communication over network 108 can utilize Ethernet or Wi-Fi-based LAN protocols, depending on the site's infrastructure. The edge connect module 1112 can generate, process, and communicate the inter-gateway data.

In an embodiment, networks 104 and 106 establish the communication links between the network layer 1004 and the cloud analysis layer 1006. The bidirectional data transmission between the gateways 1100, 1200, 1300 and the configuration server 1500 is provided by the network 104. The bidirectional data transmission between the gateways 1100, 1200, 1300 and the application servers 1600, 1700 is provided by the network 106. The networks 104, 106 can provide either or both local LAN connectivity within the site and uplink connections to the cloud over the public or private internet. The network architecture supports secure communication protocols and efficient data formats, ensuring reliable data transmission with minimal latency.

In an embodiment, the communication over networks 104, 106 is secured using Transport Layer Security (TLS) to protect data from unauthorized access during transmission. The gateways 1100 can initiate encrypted sessions using AES encryption to provide end-to-end data confidentiality and integrity. In an embodiment, authentication tokens or session keys are appended to the data packet(s), providing that authorized devices and cloud services can exchange information.

In an embodiment, the communication provided by the networks 104, 106 from the network layer 1004 to the cloud analysis layer 1006 operates on internet-based protocols, including HTTPS, MQTT, or WebSocket, depending on the application. In an embodiment, the data transmitted over networks 104, 106 undergoes protocol transformation and reformatting at the gateway level to provide compatibility with cloud services. The data can be sent by the gateways 1100 in one or more formats, such as JSON, XML, protobuf, CBOR, or other formats. In an embodiment, compressed data batches are transmitted, reducing bandwidth usage by grouping multiple sensor readings or events into a single payload.

The edge connect module 1112 provides for the aggregation and filtering of processed loT device data sent from the gateways 1100 to the cloud servers. In an embodiment, event-driven messages, such as a temperature anomaly or security alert, are sent to the cloud analysis layer 1006 to reduce traffic. Routine telemetry data, such as environmental metrics, may be batched and transmitted at scheduled intervals to optimize network efficiency.

In an embodiment, custom APIs or vendor-specific platforms, such as Azure loT Hub or AWS loT, are integrated over networks 104, 106 to enable seamless cloud interaction. In an embodiment, network 104 provides cloud-to-gateway communication by transmitting the configuration data from the configuration server 1500 to the gateways 1100. When data from the cloud is formatted for cloud-level transmission, such as in JSON, XML, protobuf, CBOR, or other formats, the data may be reformatted at the gateway level to correspond with the protocols or configurations used by the connected loT devices 1010. For example, configuration data sent in JSON from the configuration server 1500 may be parsed and restructured into BLE-compatible advertising packets or Zigbee commands for delivery to loT devices 1010. In an embodiment, the gateway 1100 applies data compression algorithms during the data reformatting process to reduce overhead within the network layer 1004.

The system 100 includes a cloud analysis layer 1006 (also referred to as services layer 1006 or cloud layer 1006). The cloud analysis layer 1006 interacts with the network layer 1004 and the gateways 1100, 1200, and 1300, receiving aggregated data, transmitting configuration updates, and coordinating operations across the network 100. The cloud analysis layer 1006 comprises of configuration server 1500 and application servers 1600, 1700. The servers may also perform data aggregation and analytics routines on the processed loT device data and cloud-directed data received from the gateways 1100.

In an embodiment, the cloud analysis layer 1006 receives cloud-directed data from the gateways 1100 over networks 104,106 for centralized control and management of the network 100. The cloud-directed data can include processed loT device data, real-time device metrics, status updates, and event-driven messages. The cloud analysis layer 1006 processes the cloud-directed data to generate insights, alerts, or operational recommendations. Configuration data transmitted from the cloud analysis layer 1006 to the gateways 1100 includes configuration changes, firmware updates, and operational rules. The configuration data provides that the loT devices 1010 operate according to predefined policies.

Additionally, any processes, operations, or functions attributed to a specific component of the configuration server 1500 may be performed through the execution of the configuration data generated by the configuration server 1500. Furthermore, the processes, operations, and configurations associated with the components of the configuration server 1500 may be executed as steps in a method for achieving the described functionality.

In an embodiment, the configuration server 1500 functions as the primary control node within the cloud analysis layer 1006. The configuration server 1500 transmits configuration data to the gateways 1100, 1200, and 1300 over network 104 to manage and synchronize the gateways. The configuration data received from the configuration server 1500 includes configuration updates, management instructions, operational rules, state configurations, recipes, and infrastructure updates. The configuration data may also include parameters such as scanning intervals, device onboarding policies, and device assignment coordination settings. The configuration data may further include software patches or parameter adjustments. The configuration data may further include device allocation information, load distribution metrics, and event triggers. The gateway 1100 applies the configuration data locally to one or more connected IoT devices 1010. Additionally, targeted configuration updates may be directed to specific loT devices 1010 for individualized operational adjustments. The configuration data provides gateways 1100, 1200, and 1300 with operational rules, device assignment configurations, and load balancing policies, which can be applied uniformly across the site through inter-gateway data. The configuration data can include real-time instructions, operational policies, device-specific rules, and device assignment instructions. The configuration data provides that the gateways 1100, 1200, and 1300 execute device transitions, load balancing, threshold checks, and network management tasks.

In an embodiment, the configuration server 1500 includes memory 1522 storing configuration data. The configuration data stored in memory 1522 can be dynamically updated based on network performance and operational requirements. The configuration server 1500 transmits configuration data to the gateways 1100, and the gateways 1100 can cache the configuration data locally. The cached configuration data provides that the gateways 1100 maintain functionality during intermittent cloud connectivity.

The configuration server 1500 can provide secure communication with the gateways 1100 through TLS-encrypted channels and authentication mechanisms.

In an embodiment, the configuration server 1500 receives user instruction data from a connected user terminal (not shown). The user instruction data can include device assignment policies, threshold parameters for event triggers (e.g., temperature limits or signal strength thresholds), load-balancing configurations, schedules for firmware updates, and adjustments to network parameters such as IP address assignments and scanning intervals. The configuration server 1500 processes and translates the user instruction data into actionable commands. The configuration server 1500 transmits the configuration data based on the user instruction data to the connected gateways 1100, 1200, and 1300 to implement network-wide changes.

The user instruction data can also include modifications to recipes and operational rules, which are stored and managed by the recipe management component 1506. The user instruction data can include updating device profiles, defining new event triggers, or modifying quality of service (QoS) policies for prioritized data transmission. In response, the configuration server 1500 generates device status data including real-time status reports, gateway performance metrics, device health indicators, and logs of executed operations. The device status data can be generated based on the cloud-direct data received from the gateways 1100. The device status data can transmitted to the user terminal for monitoring.

In an embodiment, the configuration server processor 1502 includes a state configuration engine 1504. The state configuration engine 1504 can generate configuration data to execute the operations attributed to the engine 1504. The configuration server 1500 may include a dedicated state configuration engine 1504. Alternatively, the processor 1502 can be configured to perform the functions the state configuration engine 1504.

The state configuration engine 1504 manages the generation, processing, and distribution of configuration data across gateways 1100, 1200, and 1300. The engine 1504 analyzes real-time cloud-directed data received from the gateways, including monitoring data that comprises device status metrics, performance logs, and alerts. Based on the analysis, the state configuration engine 1504 generates configuration data comprising operational rules, infrastructure updates, and device-specific commands. The configuration data provides adjustments to gateway parameters, such as device assignment policies, device onboarding protocols, or load distribution rules, to align with current network conditions.

The state configuration engine 1504 processes user instruction data received from user terminals connected to the configuration server 1500. The user instruction data may modify device rules, update gateway configurations, or create new event triggers. The engine 1504 incorporates the user instruction data into new or existing configuration data and synchronizes the configuration data across gateways over network 104. The configuration data provides that operational changes are applied locally by the edge connect module 1112 at the gateways, ensuring compliance with the updated policies and real-time network demands.

The state configuration engine 1504 provides for distributed execution of configuration data by coordinating the exchange of inter-gateway data over network 108. The inter-gateway data exchanged between gateways includes device allocation information, load balancing metrics, and synchronization signals. The engine 1504 provides that gateways 1100 implement consistent state transitions across multiple sites by applying the configuration data uniformly. For example, if the configuration server 1500 detects an overloaded gateway through incoming monitoring data, the state configuration engine 1504 generates configuration data that triggers a device assignment operation, distributing connected devices to neighboring gateways without interrupting operations.

In an embodiment, the configuration server processor 1502 includes a recipe management engine 1506. The recipe management engine 1506 can generate configuration data to execute the operations attributed to the engine 1506. The configuration server 1500 may include a dedicated recipe management engine 1506. Alternatively, the processor 1502 can be configured to perform the functions the recipe management engine 1506.

The recipe management engine 1506 in generates and distributes configuration data comprising predefined operational workflows, known as recipes, to gateways 1100, 1200, and 1300. Recipes define a sequence of tasks or actions that the gateways 1100 and connected loT devices 1010 must execute under specific conditions. A recipe may include gateway rules, device control commands, and event triggers, providing coordinated actions across multiple components in the gateways and the loT devices. The configuration data generated by the recipe management engine 1506 provides the gateways with the instructions to execute the recipes locally, such as automated device onboarding routines or multi-actuator control workflows.

The recipe management engine 1506 processes user instruction data received from terminals connected to the configuration server 1500, allowing users to modify, update, or create new recipes. The updated recipes are packaged into configuration data and transmitted to the gateways over network 104. The configuration data may provide that the gateways 1100 apply the recipes autonomously in response to predefined conditions detected by the edge module 1112. For example, the edge connect module 1112 may trigger a recipe that adjusts HVAC settings, activates lighting, and sends alerts when occupancy sensors report an increase in store traffic.

The recipe management engine 1506 coordinates recipe synchronization across gateways through inter-gateway data transmitted over network 108. The inter-gateway data includes the status of active recipes, synchronization timestamps, and device allocation changes, providing uniform execution across sites. If a gateway encounters a failure, the recipe management engine 1506 provides for recipe continuity by incorporating failover instructions into the configuration data, allowing neighboring gateways to take over pending tasks without disruption.

In an embodiment, the configuration server processor 1502 includes an edge infrastructure management engine 1508. The edge infrastructure management engine 1508 can generate configuration data to execute the operations attributed to the engine 1508. The configuration server 1500 may include a dedicated edge infrastructure management engine 1508. Alternatively, the processor 1502 can be configured to perform the functions the edge infrastructure management engine 1508.

In an embodiment, the edge infrastructure management engine 1508 generates configuration data to manage the physical and virtual resources deployed at the gateway level. The configuration data includes infrastructure updates such as scanning intervals, network routing parameters, and device onboarding policies. The configuration data can be applied by the gateways 1100, 1200, and 1300 locally to optimize operations. The edge infrastructure management engine 1508 monitors resource allocation across gateways, providing that device assignment rules and load balancing policies remain synchronized within the network layer 1004.

Inter-gateway data transmitted over network 108 allows the edge infrastructure management engine 1508 to coordinate infrastructure management tasks among gateways 1100. The inter-gateway data includes status updates, resource availability metrics, and active device connections. The inter-gateway data is transmitted to the configuration server 1500 within the cloud-directed data to provide visibility into network conditions. Based on cloud-directed data, the edge infrastructure management engine 1508 generates and distributes configuration data comprising updated rules for device assignments, bandwidth allocation, and routing adjustments to maintain system-wide efficiency.

The edge infrastructure management engine 1508 processes monitoring data generated by the edge module 1112, including device health metrics, communication logs, and error reports. The monitoring data, included within the cloud-directed data, allows the engine 1508 to detect infrastructure network congestion or loT device failures. In response, the edge infrastructure management engine 1508 generates configuration data comprising corrective actions, such as reassigning communication channels, triggering predictive maintenance routines, or activating backup gateways to mitigate disruptions.

In an embodiment, the configuration server processor 1502 includes an the loT device configuration engine 1510. The loT device configuration engine 1510 can generate configuration data to execute the operations attributed to the engine 1510. The configuration server 1500 may include a dedicated loT device configuration engine 1510. Alternatively, the processor 1502 can be configured to perform the functions the loT device configuration engine 1510.

In an embodiment, the loT device configuration engine 1510 generates configuration data directed to individual loT devices 1010. The configuration data includes loT device-specific parameters such as firmware versions, operational thresholds, and control logic settings, which are transmitted to the gateways 1100 for transmission to the directed IoT devices 1010. The loT device configuration engine 1510 provides that loT device(s) 1010 operates within defined specifications by synchronizing configuration updates with the gateways 1100. The gateways relay the updated parameters to the corresponding loT devices over network 102.

The loT device configuration engine 1510 processes user instruction data received from connected user terminals to customize device configurations based on real-time operational needs. The configuration data may also include adaptive parameters, such as dynamic performance thresholds or event-specific triggers, which the gateways apply to connected devices.

In an embodiment, the cloud application interface 1512 in the configuration server 1500 manages the exchange of application data between the cloud server 1500 and external application servers 1600, 1700 via the network 110. The cloud application interface 1512 may also convert cloud-directed data received from the gateways 1100, such as the processed loT device data, into formats compatible with the application servers 1600, 1700, providing seamless integration with third-party platforms. In an embodiment, the application data is exchanged by the application servers 1600, 1700 with the gateways 1100 via the network 106.

In an embodiment, the memory 1522 in the configuration server 1500 may store user instruction data, configuration data, operational rules, gateway settings, and synchronization schedules for network coordination. The memory 1522 includes a data repository 1524 that maintains comprehensive records, such as historical loT device data, gateway data logs, inter-gateway data, and monitoring data for diagnostic purposes. The data repository 1524 also stores device profiles, state configurations, recipes, and firmware versions to support real-time updates and event-triggered actions. The structured storage allows the configuration server 1500 to retrieve and transmit configuration updates or management instructions efficiently across the network 100.

The cloud layer 1006 includes application servers 1600, 1700 that provide for coordinating cloud-directed data exchanges and supporting interactions with third-party platforms. The application servers 1600 and 1700, shown in the Fig. 1, are illustrative, and a reference to one application server, such as application server 1600, may also cover other servers, such as application server 1700. The application servers are not limited to the specific numbers or configurations shown. In various embodiments, additional or fewer application servers may be deployed depending on the system's architecture or operational requirements.

Additionally, the reference to the subcomponents of one application server can also refer to the corresponding subcomponents of other application servers. For example, a reference to vendor cloud services 1602 in application server 1600 may also refer to vendor cloud services 1702 in application server 1700. Similarly, a reference to enterprise cloud applications 1604 in application server 1600 can refer to enterprise cloud applications 1704 in application server 1700. Further, a reference to Azure services 1606 in application server 1600 can include Azure services 1706 in application server 1700.

Further, any processes, operations, or functions attributed to a specific component of the application server 1600 may be performed through the execution of the application data generated by the application server 1600. The application data generated by any of the component of the application server 1600 provides the instructions or inputs necessary to carry out the operations described. Furthermore, the processes, operations, and configurations associated with the components of the application server 1600 may be executed as steps in a method for achieving the described functionality.

The application server 1600 receives cloud-directed data from gateways, including processed loT device data and monitoring data, to perform real-time analysis, generate operational insights, and issue alerts based on predefined conditions. The application server 1600 generates and transmits application data back to the gateways. The application data includes control commands, event triggers, and updates. The application data generated within the application server 1600 can also be stored locally at the gateways 1100 to allow repeated execution of control operations without requiring new instructions for the task(s), reducing latency and dependency on cloud connectivity.

The application server 1600 can interact with the cloud configuration server 1500 to synchronize operational policies and configuration updates across the network 110.

In an embodiment, the application server 1600 is connected to user terminal (not shown) to provide interfaces for external customers and third-party vendors utilizing IoT devices within the system 100. The application server 1600 processes user instruction data to transmit real-time instructions to gateways 1100 or initiate specific actions at the edge module 1112. The user instruction data may include service requests, operational commands, or configuration preferences provided by customers or vendor systems. The user instruction data can further include tasks such as initiating device-specific operations, adjusting display content on ESLs, scheduling device activities, or requesting analytics reports generated from loT device data. User instruction data processed by the application servers 1600 can trigger operations at the edge connect module 1112 or on loT devices 1010 through gateway communication.

In an embodiment, the application server 1600 includes the vendor cloud services 1602 to enable third-party vendors to interact with the deployed loT device infrastructure. The user instruction data may include commands for adjusting loT device operations, such as modifying ESL display content or scheduling actuator activities. Upon receiving user instruction data, vendor cloud services 1602 generate corresponding application data. The application data is transmitted to gateways 1100 over network 104, where it is executed either locally by the edge connect module 1112 or relayed to the appropriate loT devices 1010 for operational control.

The vendor cloud services 1602 can generate application data that corresponds with specific vendor-defined protocols or device standards. For instance, application data generated by vendor cloud services 1602 may instruct a gateway 1100 to update a display, initiate environmental changes, or adjust sensor configurations in real-time. Vendor cloud services 1602 also allow third-party systems to maintain consistent interactions with connected loT devices by storing operational settings locally within the gateways, enabling repeated actions without requiring frequent cloud communication.

Vendor cloud services 1602 additionally provide feedback mechanisms by receiving and transmitting user instruction data based on monitoring data received from the loT devices and gateways. The feedback loop allows vendors to track operational performance or detect anomalies across the connected loT devices.

In an embodiment, the application server 1600 includes enterprise cloud applications 1604 configured to provide integration between the loT infrastructure and enterprise-level systems, such as resource planning tools, inventory management platforms, or customer relationship management (CRM) systems. The cloud applications generate application data based on user instruction data received from enterprise systems, which may include commands for adjusting operational workflows, triggering alerts, or synchronizing device activities with enterprise processes. For example, enterprise cloud applications 1604 may generate application data that instructs gateways 1100 to adjust warehouse lighting schedules based on occupancy data or update ESL displays according to inventory levels. The application data is transmitted to gateways 1100 over network 104 for local execution or to be relayed to the appropriate loT devices 1010. Further, the application data may include operational adjustments such as task schedules, sensor configurations, or actuator commands. Monitoring data from loT devices 1010 and gateways 1100 can be processed by enterprise cloud applications 1604 to track performance metrics, inventory statuses, or system anomalies. The monitoring data allows enterprises to monitor key performance indicators and adjust workflows in response to changing operational needs.

In an embodiment, the application server 1600 includes the Azure services 1606, to provide a cloud-based interface that integrates the loT infrastructure with Microsoft Azure's suite of cloud solutions. The Azure services 1606 provide for the exchange of cloud-directed data between gateways 1100 and Azure platforms for advanced data processing, machine learning, or analytics. Azure services 1606 can receive loT device data collected by gateways 1100 and transmit it for analysis within Azure cloud environment, generating actionable insights for predictive maintenance, anomaly detection, or performance optimization. Azure services 1606 can also manage cloud-based automation workflows by processing user instruction data received from user terminals connected to the application server 1600. The user instruction data may include commands for scheduling device actions, configuring sensors, or deploying firmware updates. Application data generated by Azure services 1606 may include task schedules, alert triggers, or optimization routines transmitted to gateways 1100 to initiate operations at the edge.

In an embodiment, an edge management platform (also referred to as the Edge Connect platform or the platform) provides a coordinated, unified, and secure data pipeline for aggregating loT device data from various types of sensors and transmitting control data to loT devices 1010. In an embodiment, Edge Connect platform is implemented by the edge connect module 1112 at the gateway level for management and control of IoT devices 1010. The Edge Connect platform is also implemented at the cloud level within the edge infrastructure management engine 1508, enabling centralized oversight and control across the network.

The Edge Connect platform enables the consolidation of sensor data across a heterogeneous network including loT devices 1010, such as Electronic Shelf Labels (ESLs). The Edge Connect platform can communicate over BLE protocols and coordinating bidirectional communication between the loT devices 1010 and gateways 1100, 1200, and 1300. The Edge Connect platform processes incoming loT device data from sensors, such as leak detectors, occupancy sensors, energy monitors, and temperature sensors, and transmits cloud-directed data to configuration server 1500 and application servers 1600, 1700, thereby providing centralized management and control over a large network of loT devices 1010.

The Edge Connect platform facilitates low-latency detection and onboarding of loT devices 1010, supporting seamless device assignments as IoT devices 1010 transition between gateway 1100 coverage areas within network 108. By managing load balancing and coordinating device assignments between gateways 1100, 1200, and 1300, the Edge Connect platform distributes loT device 1010 connections across the network, preventing congestion and optimizing data traffic. The Edge Connect platform also supports security measures, such as imposter detection, by identifying unauthorized devices attempting to connect to the network. The platform assigns virtual addresses and implements virtual radios to manage and streamline communication across the system 100, enabling consistent identification and handling of IoT devices 1010 across multiple gateways.

The Edge Connect platform also manages de-duplication of advertising messages that are received from the same loT device 1010 by multiple gateways. By filtering duplicate messages, the Edge Connect platform transmits unique loT device data within the cloud-directed data to the cloud analysis layer 1006, reducing data redundancy and improving bandwidth efficiency. Furthermore, the Edge Connect platform synchronizes connections between multiple gateways and loT devices 1010, ensuring that the loT device(s) 1010 maintains an active connection even as it transitions between gateway coverage areas. This synchronization is advantageous in high-density environments where numerous loT devices must be managed simultaneously.

In an embodiment, the Edge Connect platform continuously monitors data consumption across connected loT devices 1010 and gateways 1100 to provide insights into network usage patterns. The Edge Connect platform relays consolidated monitoring data to application servers 1600, 1700 for further analysis, enabling application-level control over device operations.

The edge connect module 1112 provides functions that include establishing and maintaining communication with connected sensors, consolidating sensor data from multiple sources, and generating control commands directed at the sensors. The Edge Connect functionality enables the edge connect module 1112 to operate as a central node, managing data exchange with loT devices 1010 in real time and providing coordinated actions, such as device onboarding, data filtering, and connection management. The edge connect module 1112 further supports bidirectional communication with loT devices 1010 by using BLE or similar protocols to deliver gateway data, ensuring timely control and configuration of connected devices.

The configuration server 1500 generates configuration data, which includes parameters and properties associated with the connected loT devices 1010. The configuration data allows the configuration server 1500 to coordinate with the edge connect module 1112 to synchronize loT device settings, update operational parameters, and maintain uniform network configurations across multiple gateways.

In an embodiment, the cloud configuration server 1500 provides for a stateful configuration to oversee updates and operational states for connected loT devices 1010. The cloud configuration server 1500 generates configuration data including update schedules, rollout tracking details, and device replacement protocols. The stateful configuration enables the cloud server 1500 to provide dynamic support for large-scale deployments, monitoring and updating device states as necessary. In scenarios where errors occur or hardware needs replacement, the state configuration engine 1504 provides for a smooth recovery by reapplying the stored configuration state to maintain operational continuity.

Gateways 1100 can be organized into "sites" based on specific deployment locations and configuration requirements, allowing the system 100 to scale effectively across multiple regions or retail settings. A site may comprise of multiple gateways, supporting thousands of loT devices such as electronic shelf labels (ESLs) to facilitate comprehensive network management. Site-specific configurations are achieved through configuration data generated by the state configuration engine 1504, which defines unique settings and operational parameters for gateway(s) within a site. Configuration variables within the configuration data allow individual gateways 1100 to operate with customized settings, optimizing network behavior for distinct use cases across various environments while enabling uniform control over large, distributed device deployments.

### Sitewide Coordination

In an embodiment, the edge connect module 1112 provides for sitewide coordination of the network within system 100. Gateways, such as gateway 1100, 1200, and 1300, are interconnected over network 108. The network enables inter-gateway data exchange, allowing gateways to remain aware of other gateway(s) operations and resource states. The edge connect module 1112 within the gateway(s) generated and provide for exchanging the inter-gateway data exchange for coordinated responses to network events.

Gateways 1100, 1200, and 1300 are also connected to the cloud servers, specifically the configuration server 1500 and application servers 1600 and 1700. The cloud servers may provide the gateways with operational instructions in the form of configuration data and application data. The configuration data includes management instructions, operational rules, and updates that define specific actions and policies to be implemented across the site, such as scanning intervals, device allocation rules, and load balancing parameters. The application data may include additional instructions or event triggers for device control, such as actuator commands or display updates. When gateways 1100, 1200, and 1300 receive the configuration data or the application data, the gateways apply them in a synchronized manner, providing that all gateways follow uniform policies implemented consistently throughout the site.

Additionally, the edge connect module generates and transmits the cloud-directed data to the configuration server 1500 and application servers 1600, 1700. The cloud-directed data includes network health data and device monitoring data (collectively referred to as monitoring data). The monitoring data may include performance metrics, device health reports, and connection stability details, providing the cloud servers with real-time insights into network health and device status. The edge connect module within gateway(s) manages the bidirectional communication, aligning with inter-gateway data to provide that updates are consistently synchronized across all gateways in the system.

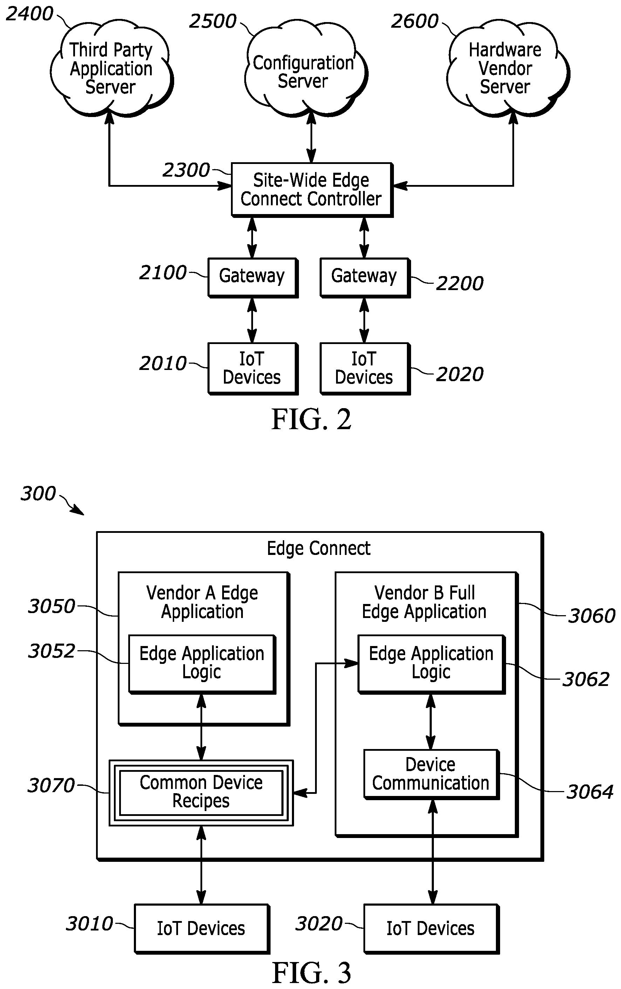

In an embodiment, the sitewide coordination can be implemented by a sitewide controller 2300, as shown in FIG. 2, connected to one or more gateways 2100, 2200. The sitewide controller 2300 includes an edge connect module that provides for sitewide coordination by managing inter-gateway data exchange and synchronizing operational responses across connected gateways. Alternatively, instead of inter-gateway data exchange, the sitewide controller 2300 communicates with gateway(s) to provide for inter-gateway coordination. The edge connect module within the sitewide controller 2300 centralizes tasks such as distributing scanning parameters, managing load balancing, and enforcing device allocation rules across all gateways, enabling consistent application of policies throughout the site. Additionally, cloud-directed data, including network health and device monitoring data, can be aggregated by the controller 2300 and sent to the configuration server 2500 for centralized analysis. The centralized structure allows the sitewide controller to act as a central node for implementing operational rules, obviating the need for inter-gateway data synchronization by performing the coordination within the controller 2300 itself.

### Coordinating Scanning Parameters

The system 100 provides for coordinated scanning parameters across multiple gateways to optimize advertisement capture from IoT devices. In an embodiment, the edge connect module 1112 is configured to signal the radio in gateway(s) to scan for advertising messages within a specific interval having one or more parameters, such as a specific channel and timing. The scanning parameters in gateway(s) can refer to the configuration of the gateway's radio module, such as configuring the radio module to actively "listen" on specific advertising channels within the frequency spectrum. For example, a scanning parameter or set of parameters might specify intervals at which the gateway listens on a set of advertising channels, such as channels 37, 38, and 39 within the Bluetooth frequency range. The loT device transmissions occur across multiple channels in quick succession, allowing a device to broadcast its presence repeatedly for detection. However, individual gateways are limited to scanning one channel at a time, which can result in missed advertisements on alternate channels. To address this, the system 100 implements a coordination mechanism for coordinating scanning parameters across the gateways.

The edge connect module 1112 within gateway 1100 manages the scanning parameters in conjunction with other gateways 1200, 1300 over inter-gateway data exchange. In an embodiment, the edge connect module 1112 in gateway 1100 is configured to operate on a preset scanning schedule. The preset scanning schedule includes assignments of scanning parameters and timing to gateway(s). The preset scanning schedule is configured such that gateways 1100 in proximity operate on different scanning intervals, timing schedules, and advertising channels, optimizing the coverage and efficiency of advertisement capture from loT devices 1010. By distributing the scanning responsibilities among the gateways 1100, the system reduces overlap and minimizes missed advertisements due to channel conflicts. Proximity between gateways may be determined based on pre-stored MAC addresses or virtual MAC (vMAC) addresses of neighboring gateways. Additionally, proximity between the gateways can be discovered using in-band and/or out-of-band ranging techniques. The edge connect modules 1112 utilize the proximity data including grouped MAC or vMAC addresses of neighboring gateways and coordinate the scanning activities of gateways accordingly. The preset scanning schedule is synchronized using inter-gateway data exchanged over network 108. The inter-gateway data provides a communication pathway that allows the edge connect modules 1112 to share scanning schedules, adjust timing, and synchronize scanning patterns in real time.

The preset scanning schedule can be received or updated by the cloud configuration server 1500 or through user instruction data from a user terminal. The cloud configuration server 1500 may transmit the preset scanning schedule as part of the configuration data to the gateways 1100. The edge connect modules 1112 can execute the preset scanning schedule locally within gateway(s), implementing the assigned scanning parameters, schedules, and advertising channels. Alternatively, the cloud configuration server 1500 may provide real-time adjustments to the preset scanning schedule, allowing dynamic assignment and modification based on current network conditions or operational requirements.

For instance, if three gateways, 1100, 1200, and 1300, are located in proximity within the same operational zone, the gateway(s) may be assigned a preset scanning schedule as follows: gateway 1100 is configured to scan on advertising channel 37 at intervals of every 20 milliseconds, gateway 1200 scans on channel 38 at intervals of every 25 milliseconds, and gateway 1300 scans on channel 39 at intervals of every 30 milliseconds. The timing schedules for gateway(s) are further staggered by starting at offset points. For example, gateway 1100 begins its scanning cycle at the 0-millisecond mark, gateway 1200 at the 5-millisecond mark, and gateway 1300 at the 10-millisecond mark within the cycle.

In an embodiment, the edge connect module applies preset deferring criteria to optimize the discovery process (e.g., service discovery, device discovery and/or other discovery process) and loT device data processing for connected loT devices. The discovery process can include identifying and establishing communication parameters with loT devices 1010 to determine their capabilities, configurations, and available services. The edge connect module is configured to dynamically adjust the discovery process and loT device data processing based on real-time network conditions and device attributes received through loT device data. For example, when the edge connect module detects a high volume of advertising messages from loT devices, as compared to a volume threshold level set within the preset deferring criteria, the edge connect module selectively postpones specific sections of the discovery process or processing of incoming loT device data processing that require longer processing times. The target sections or incoming loT device data for postponing may include device authentication checks, detailed capability inquiries, or secure key exchanges, which can be more time-intensive steps in establishing a connection. By deferring the sections or incoming loT data processing, the edge connect module prioritizes necessary connection or data processing steps and reduces delays in processing high volumes of incoming messages, thereby minimizing the overall latency of discovery and maintaining efficient device management. The preset deferring criteria (also referred to as suspension criteria) may also include additional attributes such as device priority, battery levels, or specific device classifications to modify the discovery process. For instance, devices with low battery indicators or non-critical roles may undergo a shortened discovery process, while high-priority devices may be fully processed.

In an embodiment, the preset scanning schedule organizes gateways 1100 into a grid-like scanning pattern across the network. The preset scanning schedule designates alternating gateways to operate within distinct scanning intervals to minimize overlap. For example, gateways positioned within "primary" zones of the grid are assigned an initial scanning time window, while gateways in adjacent "secondary" zones begin scanning in a subsequent, non-overlapping time window. The time-based division across the grid reduces redundant scanning efforts and conserves network resources by distributing scanning loads efficiently. In dense environments, where large volumes of advertising messages from loT devices may occur simultaneously, the grid-based coordination maximizes resource allocation by staggering scanning intervals such that the zone(s) captures unique data packets.

By assigning distinct parameters or channels to gateway(s), the system reduces the likelihood of overlap or "shadow" networks, ensuring comprehensive coverage and improved efficiency in capturing advertising messages from the loT devices distributed throughout the site. The edge connect modules 1112 can leverage inter-gateway data to continuously refine scanning patterns, adapting to changes such as new gateway deployments or shifts in loT device activity. This synchronized configuration prevents duplication of connections and minimizes missed advertisements by distributing scanning duties across the site, dynamically adjusting as needed based on traffic patterns or changes in device density.

In an embodiment, the coordination of scanning parameters can be implemented by a sitewide controller 2300, as illustrated in FIG. 2. The sitewide controller 2300, connected to one or more gateways 2100, 2200, includes an edge connect module that coordinates scanning activities and device discovery processes across connected gateways. In the architecture, the sitewide controller 2300 replaces the need for an edge connect module within gateway(s), centralizing coordination functions at the controller 2300 to provide synchronization across the network. The sitewide controller communicates with gateway(s) to manage scanning parameters, schedules, distribute preset filtering criteria, and adjust discovery process parameters for consistent implementation of network-wide policies. Alternatively, instead of inter-gateway data exchange, the sitewide controller 2300 communicates with gateway(s) to provide for inter-gateway coordination. The centralized structure allows the sitewide controller to act as a central node for implementing operational rules, obviating the need for inter-gateway data synchronization by performing the coordination within the controller 2300 itself.

### Coordination of Device Connections

In an embodiment, the edge connect modules 1112, 1212, and 1312 within gateway(s) 1100, 1200, and 1300 is configured to implement preset filtering criteria on advertising message data received from loT devices 1010. The edge connect module is configured to allow connections with loT devices that meet the preset filtering criteria. The advertising message data transmitted by loT devices 1010 include, but are not limited to, Media Access Control (MAC) addresses, virtual MAC (vMAC) addresses, signal strength, device type, firmware version, battery status, service UUIDs, proximity information, sensor readings, operational state indicators, and other device-specific characteristics. The loT device data allows the edge connect module to effectively distinguish between various devices and prioritize communication based on operational requirements and sitewide coordination. In an embodiment, the edge connect module is configured to respond to advertising messages to establish connections exclusively with devices that meet the preset filtering criteria.

The preset filtering criteria include applying a minimum signal strength threshold. For example, the edge connect module upon receiving advertising message data verifies whether the loT device exhibits a signal strength threshold. The filtering criteria provide for connecting to devices with stronger signals and high signal-to-noise ratios (SNR). Advertising messages above the threshold are more likely to maintain reliable detection, even in environments prone to signal collision. Devices situated further from the radio, falling below the signal strength threshold, are likely to connect to a closer radio with a higher received signal strength or SNR. The minimum signal strength threshold criteria can be received from the cloud configuration server 1500 as configuration data and stored locally at the edge connect module 1112 for execution within the gateways. Alternatively, the cloud configuration server 1500 can dynamically update the signal strength threshold criteria in real time, based on current network conditions, device density, or environmental factors. For example, higher received signal strength thresholds may be applied to channels or frequencies that experience elevated noise levels or increased channel activity.

In an embodiment, the filtering criteria include vMAC addresses. The vMAC addresses include virtual identifiers assigned to loT devices 1010. The assignment of vMAC addresses may occur locally at the gateway level, where the edge connect module 1112 coordinates the issuance of unique vMACs to loT devices 1010 following predefined rules. The predefined rules may be adjusted based on user instruction data received from the configuration server 1500, enabling the user to update vMAC assignment by specifying priorities, address ranges, or specific device handling requirements. In an alternative embodiment, the cloud configuration server 1500 manages the assignment of vMAC addresses within the configuration data sent to the edge connect module 1112. The configuration data may include updates or changes to the vMAC assignment protocols, allowing the cloud configuration server 1500 to adjust the virtual addressing scheme remotely and dynamically.

The edge connect module 1112 may assign virtual MAC (vMAC) addresses to radios within the gateway or loT device infrastructure. In one embodiment, these vMAC addresses are allocated to "virtual radios," which may be implemented using individual radios or combinations of radios within the gateways or loT devices. A single physical radio can support multiple virtual radios through the assignment of multiple vMAC addresses. A single vMAC address may correspond to an individual radio or a set of radios within a gateway. The vMAC assignment enables dynamic management of loT device connections by allowing an ESL or other wireless device to connect to multiple physical radios associated with a shared virtual radio identified by a common vMAC address. The vMAC assignment supports functions such as combining or de-duplicating copies of advertising messages received across different physical radios. Additionally, vMAC addresses enable seamless roaming of loT devices across radios under the same virtual radio, maintaining uninterrupted connectivity even as the device moves between coverage areas. vMAC assignments also supports failover transitions. For example, if one physical radio fails, loT devices connected under the same vMAC address can seamlessly transition to an alternate radio without requiring the wireless device to re-establish its connection. Device details, maintained based on MAC addresses, allows the seamless device assignment by associating device assignment protocols with the vMAC address used during the initial connection.

The preset filtering criteria enable the edge connect module 1112 to determine whether a device's advertising messages meet the attributes stored within the preset filtering criteria. For example, filters based on MAC addresses or vMAC addresses allow the edge connect module 1112 to differentiate between authorized and unauthorized devices. The MAC address provides a hardware-based identifier. The vMAC provides flexibility in virtual address allocation and reassignment. Additional filtering criteria based on device-specific characteristics may provide an additional layer of precision. For instance, combinations of advertising message data, such as a low-battery indicator combined with a high-priority device tag, may trigger a preset processing protocol for specific advertising messages based on the preset filtering criteria.

In an embodiment, the preset filtering criteria are implemented locally by the edge connect module 1112 within the gateways. The edge connect module 1112 may store and apply the filtering criteria to incoming advertising messages from loT devices. The preset filtering criteria can be updated based on configuration data or user instruction data received from the configuration server 1500, allowing for responsive adjustments to the filtering rules based on changing network conditions, user directives, or operational policies. Alternatively, the filtering process operates through a unified communication interface involving both the edge connect module 1112 and the cloud configuration server 1500. The cloud configuration server 1500 may transmit configuration data in real-time, including updated filtering criteria, thresholds, or parameters. The configuration data can refine the filtering process either continuously or at scheduled intervals, depending on network conditions, device density, or operational requirements. By processing configuration data from the cloud configuration server 1500, the edge connect module 1112 dynamically applies the latest filtering rules without interrupting ongoing communications with connected devices. The inter-gateway data provides for a synchronized application of the preset filtering criteria across multiple gateways. The filtering process can also be coordinated among gateways, such as gateways 1200 and 1300, through inter-gateway data exchanged over the network 108. The inter-gateway data allows the edge connect module 1112 in gateway(s) to share filtering criteria, device status information, and operational metrics, maintaining consistent filtering across the network layer 1004. The coordination provides uniform application of filtering criteria, thereby improving the system's performance and preventing redundant processing across gateways. The edge connect module 1112 in gateway(s) may process the inter-gateway data to update or adjust filtering criteria as needed to provide a scalable implementation for handling high densities of loT devices across a distributed network.

In an embodiment, the edge connect modules 1112, 1212, and 1312 within gateways 1100, 1200, and 1300 coordinate to apply preset filtering criteria across the network. The edge connect modules evaluate incoming advertising messages based on the preset filtering criteria, to determine the most suitable gateway for establishing the connection based on the preset filtering criteria. The preset filtering criteria further includes attributes to distinguish the most appropriate gateway to establish a connection with an loT device when multiple gateways receive identical advertising messages. The preset filtering criteria may include vMAC address designation, highest signal strength, proximity data, cached connection history, device-specific operational states, or predefined device priority tags assigned to specific gateways. For example, in instances where multiple gateways detect the same loT device, the edge connect modules implement filtering criteria that prioritize connection through the gateway receiving the highest signal strength. The proximity data may include grouped MAC or vMAC addresses of adjacent gateways and mapped physical locations of gateways or loT device regions. Further, the proximity of gateways may be determined through pre-stored MAC or vMAC addresses of neighboring gateways.

In an embodiment, the cloud configuration server can provide configuration data to adjust the edge connect module's discovery process protocols dynamically. The cloud configuration server may transmit parameters, such as updated filtering thresholds or instructions for caching discovery information, enabling the edge connect module to respond to varying network traffic and environmental factors. Additionally, the edge connect module can utilize inter-gateway data to coordinate discovery process adjustments across multiple gateways to provide uniform criteria and caching techniques are applied throughout the network layer.

The inter-gateway data stream enables continuous synchronization among gateways 1100, 1200, and 1300, allowing edge connect module(s) to stay updated with the connection status and operational metrics of neighboring gateways. When an IoT device begins broadcasting an advertising message, the edge connect modules within gateway(s) apply the preset filtering criteria, evaluating the advertising message attributes and comparing signal strengths across gateways. The gateway that meets the criteria, for example, the one closest in proximity and receiving the strongest signal is designated as the primary connection point. The other gateways, upon receiving this selection information via inter-gateway data, will halt their connection attempts, thereby preventing redundant device connections. The inter-gateway data facilitates additional coordination processes by enabling the edge connect modules 1112, 1212, and 1312 to dynamically adjust the preset filtering criteria based on network-wide conditions. For instance, in high-density loT environments, the criteria may automatically adjust thresholds for signal strength or shift priority to gateways with lower network loads, distributing device connections evenly across the network.

By coordinating these vMAC assignments across gateways 1100, 1200, and 1300, the edge connect module 1112 ensures that gateways in proximity do not initiate redundant connections to the same loT device 1010.

In an embodiment, the coordination of device can be implemented within an architecture that utilizes a centralized sitewide controller 2300, as illustrated in FIG. 2, connected to multiple gateways 2100, 2200. The sitewide controller 2300 includes an edge connect module, which provides centralized sitewide coordination by managing and applying the preset filtering criteria across all connected gateways. The configuration allows the sitewide controller to coordinate device connection activities by communicating with gateway(s) instead of inter-gateway data exchanges. The controller 2300 synchronizes connection management based on the controller's directives. In the architecture, the sitewide controller 2300 would apply and update preset filtering criteria across the gateways. The preset filtering criteria can be dynamically set and updated by the sitewide controller 2300 based on real-time network conditions or operational policies received from the configuration server 2500 or third-party application server 2400. Alternatively, the preset filtering criteria may be transmitted from the sitewide controller and stored locally within gateway(s), allowing gateways to independently apply the criteria while the controller maintains overall synchronization. Instead of inter-gateway data exchange, the sitewide controller 2300 communicates with gateway(s) to provide for inter-gateway coordination. The centralized structure allows the sitewide controller to act as a central node for implementing operational rules, obviating the need for inter-gateway data synchronization by performing the coordination within the controller 2300 itself.

### Pre-approved Connections

In an embodiment, the preset filtering criteria may include a cached history of preferred or previous connections between loT devices and gateways. For example, if an advertising message from the same device is received by multiple gateways, the connection would be prioritized with the gateway to which the device had previously connected. Further, a preferred connection between the device and gateway can prestored within the gateways or the cloud configuration server. The edge connect module can further improve the discovery process by caching connection details from completed discovery sessions. In an embodiment, the edge connect module stores connection data for specific device types or models, associating it with identifiers within the preset filtering criteria. The cached history of preferred or previous connections can be synchronized at the gateway level by transmitting the cached history within the inter-gateway data. Additionally, the cached history of preferred or previous connections can stored at the cloud configuration server 1500. When new loT devices with similar characteristics initiate a discovery process, the edge connect module retrieves the stored connection information, allowing the loT device to bypass redundant portions of the discovery process. The caching mechanism can reduce the processing load by leveraging prior connections to accelerate discovery for identical or compatible devices.

In an embodiment, the edge connect module 1112 applies the pre-approved connections and caching mechanisms to improve device connectivity. The approved device list is used as a preset filtering criteria to process inbound advertising messages and initiate the connection between the preferred or previously connected gateway and the loT device. For example, if an advertising message from the same loT device is detected by multiple gateways, the edge connect module 1112 can consult its cached history to connect the device with its previously connected gateway. Thus, the edge connect module facilitates direct connection between the loT device and its preferred or previously connected gateway, bypassing the need for repeated discovery process for the same loT device. By leveraging cached connection data, the edge connect module initiates connections, streamlining the reconnection process.

In an embodiment, the cloud configuration server can provide configuration data to adjust the edge connect module's discovery protocols dynamically. The cloud configuration server may transmit parameters, such as updated filtering thresholds or instructions for caching discovery information, enabling the edge connect module to respond to varying network traffic and environmental factors. Additionally, the edge connect module can utilize inter-gateway data to coordinate discovery process adjustments across multiple gateways to provide uniform criteria and caching techniques are applied throughout the network layer.

By coordinating the vMAC assignments across gateways 1100, 1200, and 1300, the edge connect module 1112 ensures that gateways in proximity do not initiate redundant connections to the same loT device 1010.

### Network Health and Device Monitoring Data

In an embodiment, the edge connect module 1112 is configured to generate network health data, including metrics such as packet loss, signal strength, response times, latency indicators, connection stability, connection failures, response failures, packet retries, and diagnostic error reports. The network health data may also include metrics on data consumption, noise levels across communication channels, spectral capacity, and the frequency of device reassignments among gateways. Network noise levels refer to the measurement of interference across communication channels, including external radio frequency interference or overlapping signals from other nearby devices. Spectral capacity includes a gateway or access point's ability to manage concurrent data transmission within its designated frequency band. Noise levels represent interference across communication channels, including in-band noise from nearby or co-located networks, such as Wi-Fi or other radio traffic. Environmental monitoring data allows the edge connect module 1112 to assess noise impact on access point(s) and adjust radio parameters accordingly.

The network health data can be generated at an individual gateway level such as network health data for gateway 1100. The network health data may also reflect an overall assessment of network conditions across all gateways. To generate network health data, the edge connect module 1112 can aggregate the inter-gateway data exchanged between gateways 1100, 1200, and 1300. The inter-gateway data can include metrics such as packet transmission rates, latency reports, and signal quality indicators. Additionally, the edge connect module 1112 integrates IoT device data received from connected loT devices 1010, capturing real-time signal strength, response times, and connectivity stability.

In an embodiment, the edge connect module 1112 generates device monitoring data to assess the health and functionality of loT device(s) 1010 connected to the system. The device monitoring data includes attributes such as battery levels, signal strength, communication logs, status reports, performance metrics, connectivity states, error logs, uptime, and operational metrics related to device's health and availability. Device monitoring data can be generated by processing the loT device data received at the gateways 1100. The device monitoring data can be periodically updated to maintain up-to-date insights into device-specific conditions. The device monitoring data can be generated based on advertising messages from loT devices attempting to connect to capture device health and activity status before full integration into the network. The device monitoring data may further include numbers of messages, frequency of messages, and received signal strengths of messages.

The inter-gateway data exchange enables the edge connect module 1112 within gateway(s) to gather comprehensive network health data and device monitoring data by aggregating metrics from across multiple gateways. The gateway's edge connect module 1112 continuously transmits and receives inter-gateway data, which includes individual gateway metrics, such as packet loss rates, latency measurements, and signal strength indicators from connected loT devices. The inter-gateway data exchange allows edge connect module(s) to analyze real-time performance across the entire network, consolidating individual metrics into a holistic dataset of the network's health. For instance, as gateways 1100, 1200, and 1300 share inter-gateway data, the edge connect modules within these gateways can detect fluctuations in network load, shifts in spectral capacity, or rising noise levels at specific locations, adjusting their respective configurations accordingly.

Additionally, inter-gateway data provides for generating device monitoring data by sharing metrics related to individual loT device performance and connectivity state across gateways. The inter-gateway data includes real-time updates on the device's status, such as signal strength variations or connection stability. This information is relayed to other connected gateways, enabling the edge connect module to create a consolidated, up-to-date monitoring profile for the loT device.

The edge connect module 1112 can transmit network health data and device monitoring data (collectively referred to as monitoring data) as part of cloud-directed data to the configuration server 1500 and application servers 1600 and 1700. The cloud servers may further transmit the network health data and device monitoring data to the users via user terminals. The configuration server 1500 can process the monitoring data to track the operational performance and status of gateways and loT devices. Users connected to the configuration server 1500 access the monitoring data to update configuration parameters, modify operating rules, or set up additional monitoring criteria. For example, the users may monitor data usage and associated transfer costs from BLE networks to outside systems. Further, device monitoring data enables real-time insights into device functionality, such as identifying devices with low battery levels, detecting communication anomalies, or tracking devices that may require maintenance due to frequent errors or reduced connectivity. For instance, the network health data showing high retry rates or frequent connection drops could indicate use of unauthorized devices or reveal underperforming infrastructure, such as failing access points or nonresponsive electronic shelf labels (ESLs). Additionally, network health data and device monitoring data may be communicated with other gateways as inter-gateway data, supporting coordination for failover operations and enabling predictive maintenance across the network.

In an embodiment, the coordination and generation of network health data and device monitoring data can be implemented by a sitewide controller 2300, as shown in FIG. 2, connected to one or more gateways 2100, 2200. Instead of gateway(s) aggregating inter-gateway data independently, the controller 2300 centralizes the collection and analysis of network metrics, such as packet loss, latency, signal strength, and device connectivity stability, which it receives from each gateway.

### Device Assignment Routine

In an embodiment, the edge connect module 1112 in gateway(s) 1100 provides for implementing a device assignment process, such as a handoff process. The device assignment process can include transferring an IoT device connection from source gateway to a target gateway using inter-gateway data communication. Device assignment enables the edge connect module to modify or reconfigure the network in response to specific events, referred to as device assignment triggers. The device assignment routine includes initiating reassignment of the loT device connection to optimize network continuity and maintain seamless connectivity. During the device assignment, device(s) can maintain uninterrupted communication by coordinating actions among gateways using inter-gateway data exchange and virtual MAC (vMAC) address management.

The device assignment routine can be executed by the edge connect modules synchronized across the gateways through inter-gateway data exchange. The target gateway can be either predesignated within the device assignment routine or dynamically selected based on target gateway selection parameters such as current load capacity, proximity to the loT device, received signal strength, device communication history, and available spectral resources. Within the device assignment routine, the edge connect module initiates the transfer of device information, such as bonding information or device details, from the source gateway or other data source to the target gateway. The device information can include MAC addresses, vMAC addresses, timing data, one or more loT device identifiers, encryption keys, communication states, device status indicators, and protocol versions necessary for the seamless continuation of the device connection.

The device information can be transmitted via inter-gateway data from the source gateway to the target gateway, enabling the target gateway to adopt the device's previous connection state. For example, the target gateway, upon receiving device information, will broadcast or assume the vMAC address of the source gateway, which enables the loT device to recognize the connection seamlessly. The edge connect module is configured to update the new gateway to adopt the vMAC address previously used by the source gateway. The vMAC address, associated with one or more physical or virtual radios in the gateways, is used as a persistent device identifier, providing continuity by allowing the device to remain unaware of the change in gateway connection. The device assignment routine obviates the need for reconnection or reconfiguration by the device, maintaining a continuous data exchange without requiring the device to reinitiate connection protocols.

For device assignment triggers such as user-initiated device assignment, cloud-initiated device assignment, load balancing device assignment, or roaming device assignment, the device assignment routine includes a set of device assignment instructions. The device assignment instructions direct the source gateway to cease connection attempts or communication with the designated loT device, while concurrently instructing the target gateway to assume connection responsibilities to the designated loT devices. The inter-gateway data provides real-time coordination of device assignment instructions to enable the source gateway to release the device information as the target gateway adopts the source gateway's communication state. Device assignment, including connection or PAwR handoff can be hard or soft. The peripheral or device can have connection with both for a soft handoff, or the connection can terminate prior to the target gateway requesting a connection.

In a scenario where the device assignment involves an Electronic Shelf Label (ESL) operating on a Periodic Advertisement with Response (PAwR) train, the device assignment routine instructs the target gateway to assume responsibility for communicating with the ESL during the ESL's designated timeslot. The device assignment routine may include sending a transition command to the loT device 1010, instructing the device to initiate or continue broadcasting its advertising messages. The device assignment routine, executed by the edge connect module, allows the target gateway to maintain the synchronized timing and communication parameters previously established with the ESL by the source gateway, ensuring the connection remains intact through the device assignment.

In an embodiment, the device monitoring data includes a cached history of preferred or previous connections between loT devices and gateways. Further, a preferred connection between the device and gateway can prestored within the gateways or the cloud configuration server. In an embodiment, the edge connect module stores connection data for specific device types or models, associating it with identifiers within the preset filtering criteria. The cached history of preferred or previous connections can be synchronized at the gateway level by transmitting the cached history within the inter-gateway data. Additionally, the cached history of preferred or previous connections can stored at the cloud configuration server 1500. When a device assignment routine is initiated for an loT device with a cached history of preferred or previous connections between loT devices and gateways, the loT device may be connected to a target gateway based on this cached history of preferred or previous connections.

When a device assignment event occurs due to a failover scenario, such as a gateway failure, the edge connect module will notify other connected gateways via inter-gateway data to take over the device connections maintained by the inactive gateway. The device details, including the vMAC addresses and/or identifier(s) associated the loT device(s), is dynamically distributed to the target gateway(s). The communication instructs the target gateway(s) to start listening for the specific loT device identifiers associated with the failed gateway, allowing for immediate adoption of the device connections without disruption.

In an embodiment, the device assignment routine within the edge connect module applies preset filtering criteria and other selection parameters to identify the most suitable target gateway for the device assignment based on factors such as signal strength, proximity, cached connection history, or available resources. The selected target gateway then processes the received device information, enabling the target gateway to establish and maintain a seamless connection with the loT device. The device assignment process may be coordinated and processed either locally within the gateways or centrally through the cloud configuration or other server, depending on the sitewide configuration. In either configuration, the inter-gateway data exchange and the edge connect module's coordination ensure that the device assignment process is completed effectively.

In an embodiment, the device assignment routine is executed by the edge connect module to manage device connection transitions during the initial stages of connection building such as when advertising messages are actively being processed. During this phase, the device assignment routine continuously assesses connection parameters across multiple gateways. If a gateway other than the current connection point exhibits metrics that better satisfy the preset filtering criteria such as improved signal strength, lower network load, or improved proximity to the loT device the device assignment routine initiates a dynamic reassignment to this target gateway. The reassignment occurs by transferring the device information, including timing synchronization and device-specific identifiers, allowing the new gateway to take over the connection seamlessly.

In an embodiment that can be supported by Periodic Advertisement with Response (PAwR) trains, the device assignment routine is further configured to coordinate the transfer of connection responsibilities among gateways during ongoing PAwR communication processes. The PAwR protocol operates on defined advertisement intervals and channel sequences that provide for the consistent operation of loT devices. The loT devices such as Electronic Shelf Labels (ESLs) rely on synchronized transmissions. To implement the device assignment within a PAwR train, the edge connect module includes timing details in the device information. The timing details can include one or more of advertisement intervals, channel sequences, and slot assignments associated with the PAwR process. The device information enables the target gateway to assume the source gateway's transmission role without interrupting the scheduled PAwR intervals or requiring the loT device to resynchronize.

The device assignment routine uses inter-gateway data to transfer parameters relevant to the PAwR communication from the source gateway to the target gateway. Parameters such as timing offsets and channel hopping sequences are synchronized to allow the target gateway to resume the PAwR transmission seamlessly. The edge connect module within gateway(s) processes the inter-gateway data exchanges in real-time, coordinating across gateways to maintain continuous PAwR communication even during device assignments.

In an embodiment, the device assignment trigger is based on load balancing criteria derived from network health data and device monitoring data. The load balancing criteria includes metrics exceeding predefined load thresholds based on network health data and device monitoring data such as CPU usage percentage, resource allocation limits, and congestion thresholds set by network administrators. For example, load balancing criteria includes congestion metrics, such as the volume of queued packets or active connection counts, may indicate that one or more radios within a gateway are experiencing high traffic density. The load balancing criteria may include measurements of received signal strength (RSSI), CPU usage, or memory consumption at the gateway level. The load balancing criteria may include reassignment history indicating scenarios involving frequently moving devices such as Electronic Shelf Labels (ESLs). When an loT device exhibits periodic movements or moves in response to certain events, the reassignment history can indicate that device assignment may improve network performance.

In another embodiment, the device assignment trigger is based on predictive device assignment criteria directed to preemptively mitigate potential network congestion or degradation. The predictive device assignment criteria uses network health data to forecast impending load imbalances or network strain that could affect connection stability. For instance, if a source gateway's resource usage patterns or signal quality metrics indicate a likely drop in service quality, the edge connect module may initiate device assignment preemptively, thus averting terminal network conditions such as packet loss, latency spikes, or signal dropouts.

In a further embodiment, the device assignment is triggered during the connection-building phase, particularly when advertising messages from loT devices are initially being processed. If the advertising messages such as RSSI values or initial signal quality suggest that a different gateway could provide improved connectivity, the device assignment is initiated mid-process. In the case of PAwR (Periodic Advertisement with Response) communication, the device assignment can be applied to optimize resource allocation by redirecting the connection to a gateway better equipped to handle the PAwR sequence timing and channel distribution.

In an embodiment, upon activation of a device assignment trigger, the target gateway is selected based on selection parameters within the device assignment routine. The selection parameters may include current load capacity, measured by CPU and memory utilization, proximity to the loT device, current received signal strength, historical connection stability, and spectral resources available at neighboring gateways. The edge connect module can dynamically evaluate the parameters.

In an embodiment, the selection of a subset of loT devices to assign from one gateway to another during load balancing may be based on a set of predefined parameters evaluated by the synchronized edge connect modules. The predefined parameters can include criticality or priority levels assigned to specific devices, which are based on stored values indicating their operational importance within the network. The predefined parameters can include device classification to prioritize handoff for devices belonging to high-demand categories, such as Electronic Shelf Labels (ESLs) or sensors in critical monitoring zones. The predefined parameters can include reassessed signal strength measurements, such as RSSI with selected loT devices showing better signal strength at the target gateway prioritized for reassignment. The predefined parameters can include Quality of Service (QoS) metrics such as latency sensitivity and packet transmission rates, historical mobility patterns of the devices and battery levels.

### Failover Device Assignment Trigger

In an embodiment, the device assignment trigger is initiated by a gateway failover event where an entire group of connected loT devices is reassigned to another gateway. The failover trigger is activated when a gateway experiences an unexpected failure, rendering it inactive, or during planned maintenance that requires the gateway to temporarily go offline. The device assignment criteria for such an event include the gateway's inactive status, detected through indicators from network health data or device monitoring data, or an upcoming scheduled maintenance period.

### Roaming Device Assignment Trigger

In an embodiment, the device assignment trigger includes a roaming event initiated when an loT device physically moves within the network, shifting the device proximity from one gateway to another. The movement can be detected through inter-gateway data, where changes in device assignment criteria, such as increased signal strength, signal consistency, or improved proximity to a new gateway, prompt the device assignment trigger. For instance, if the device signal strength at a target gateway surpasses that of the source gateway, or if signal stability indicates a more favorable connection with the new gateway, the handoff process is triggered. The roaming handoff criteria can also include reactivation of a preferred gateway, heat level of the device, or nearby gateways reporting stronger and reliable connections.

In an embodiment, the device assignment triggers and device assignment criteria are based on instructions received from the cloud servers or other source, through configuration data or user instruction data. The cloud configuration server may dynamically update device assignment criteria, such as thresholds for load balancing, signal strength preferences, or failover responses, which are then communicated to all gateways for immediate implementation. Alternatively, device assignment triggers and criteria can be stored locally within gateway's edge connect module, enabling gateways to operate autonomously in response to real-time conditions. Local implementation allows for synchronized, sitewide device assignment management, with gateway sharing updates through inter-gateway data.

In an embodiment, device assignment coordination can be implemented in an architecture including a centralized sitewide controller 2300, as shown in FIG. 2, which is connected to one or more gateways, such as gateways 2100 and 2200. The sitewide controller 2300, including an edge connect module, centrally manages device assignment coordination by monitoring network events, device connection statuses, and resource states across the network. Rather than relying on inter-gateway data for synchronization, the controller 2300 communicates with gateway(s) to coordinate connection states and reassign device handling responsibilities dynamically to target gateways. Upon identifying a device assignment trigger, such as gateway inactivity or load balancing requirements, the controller 2300 executes the device assignment routine by exchanging device information with the selected target gateway. Further, the sitewide controller 2300 applies preset filtering criteria to identify the most suitable target gateway based on factors such as signal strength, proximity, and current load, ensuring uninterrupted service continuity.

Referring now to FIG. 2, shown therein is an illustrative block diagram of the loT wireless network management system 200, according to an embodiment.

The loT devices 2010 and 2020 are endpoint devices within the network, configured to transmit environmental data or receive control commands through protocols such as BLE or Zigbee. The loT devices 2010 and 2020 can include sensors, actuators, display modules, and other specialized components depending on the application. The operational behaviors, components, sub-components, and descriptions of loT devices 1010 in FIG. 1 can apply to loT devices 2010 and 2020 in FIG. 2.

The gateways 2100 and 2200 operate as intermediary network nodes or access points between loT devices 2010, 2020, and cloud-based servers. The gateways 2100 and 2200 may partially provide for data aggregation, protocol translation, and initial data processing at the edge. Similar to gateways 1100 in FIG. 1, gateways 2100 and 2200 facilitate bidirectional data flow between the perception layer and cloud servers. The functionalities, hardware, and processes attributed to gateways 1100 in FIG. 1, including data aggregation, local processing, and protocol harmonization, may also apply to gateways 2100 and 2200. However, in the present embodiment, the edge connect functionality of edge connect module 1112 in gateway 1100 in FIG.1 is centralized within the sitewide edge connect controller 2300 (also referred to as sitewide controller 2300 or controller 2300). The sitewide controller 2300 is communicatively connected to multiple gateways. The sitewide controller 2300 may be connected to the gateways in a variety of network deployments, for example, in star topology. The sitewide controller 2300 oversees connectivity and resource management across all gateways 2100, 2200.

In an embodiment, the sitewide controller 2300 includes an edge connect module (not shown). The edge connect module in the sitewide controller 2300 is configured to perform the processing operations and functions conducted by the edge connect module 1112 within individual gateways. The functions of the edge connect module can be executed by a processor within the controller 2300 or by the controller 2300 itself. By integrating the edge connect functionality within a single controller, the system 200 provides unified edge management across gateways 2100 and 2200. The controller 2300 provides for consolidated and efficient handling of loT device onboarding, data filtering, de-duplication, load balancing, and device assignment management from a single control point. Instead of gateway(s) independently managing these functions, controller 2300 is connected to the gateway(s), allowing the controller 2300 to execute the functions in a coordinated manner across all connected gateways.

The controller 2300 connects to one or more gateways 2100, 2200. The edge connect module within controller 2300 adapts to the centralized operation by dynamically interacting with gateway(s). The sitewide edge connect controller 2300 operates as a central node for implementing the edge connect functionality across the system 200.

The controller 2300 can manage the onboarding process for new devices, apply load balancing by redistributing loT device connections among gateways 2100, 2200, and coordinate seamless device assignments for devices transitioning between coverage areas. The edge connect module operates as a single point of edge management, and reduces the redundancy associated with distributing edge functions across multiple gateways 2100, 2200.

The sitewide controller 2300 is configured to manage operations across multiple gateways, such as gateways 2100 and 2200, by transmitting coordination signals to the gateways to provide synchronized device management and network functionality. The sitewide controller 2300 receives gateway data from the gateways 2100 and 2200, which may include metrics such as device connection states, signal strength reports, and operational performance data. Based on the gateway data, the sitewide controller 2300 may transmit coordination signals to the gateways. The coordination signals provide instructions to the gateways to modify their scanning parameters, adjust device connection parameters, or execute specific operational protocols. For example, a coordination signal may specify non-overlapping scanning schedules for gateways based on a preset scanning schedule. IoT device data received by the gateways from loT devices is processed into gateway data, which is then aggregated and transmitted to the sitewide controller. The bidirectional exchange of data provides seamless integration between the loT devices, gateways, and the sitewide controller.

The sitewide controller 2300 also communicates with external cloud servers, such as the cloud configuration server 2500 and application servers 2400, 2600. The controller 2300 generates cloud-directed data, which includes aggregated network health data and operational metrics from the gateways. The cloud-directed data is transmitted to the cloud configuration server to provide real-time insights into network performance. Configuration data transmitted by the cloud configuration server 2500 to the controller 2300 may include operational rules, updated scanning intervals, or device allocation instructions. Similarly, application data from third-party application servers 2400, received by the controller 2300, may include event triggers or device-specific commands. User instruction data, transmitted from a user terminal to the cloud configuration server or application servers, may further modify the configuration or application data.

Any function attributed to the sitewide controller may be implemented by transmitting coordination signals to the gateways. Similarly, any action caused by one component to another is performed by transmitting data between the components. For instance, gateways can update the sitewide controller on the network status by transmitting gateway data. IoT devices can provide operational parameters or device-specific metrics to the gateways by sending loT device data. The cloud configuration server can instruct the sitewide controller by transmitting configuration data. The user instruction data from a user terminal may be transmitted to the cloud servers to define specific operational rules or preferences. The data exchanges form the basis of interactions between components, providing the necessary instructions, updates, or metrics to perform the described functions dynamically and in a coordinated manner.

The controller 2300 can dynamically reallocate loT devices 2010, 2020 between gateways 2100, 2200 based on real-time conditions, providing optimal resource utilization and reducing network congestion. For example, if gateway 2100 reaches its capacity limit, controller 2300 can redirect new devices to gateway 2200, balancing the load across the network and maintaining efficient data transmission.

The configuration server 2500 generates and transmits configuration data to the sitewide edge connect controller 2300. The configuration data includes operational rules, device assignment coordination parameters, firmware updates, and load balancing policies. By sending configuration data to the controller 2300, the configuration server 2500 enables consistent application of configurations across gateways 2100, 2200, providing that all connected devices operate under synchronized policies and configurations. The centralized data flow improves scalability and simplifies network management for large-scale deployments. The configuration server 2500 can perform functions and include components similar to the configuration server shown in FIG. 1, with adjustments to interact with the controller 2300. The configuration data generated by configuration server 2500 may be consistent with the configuration data of FIG. 1. The configuration data is directed specifically to the controller 2300. The controller 2300, in turn, implements the configuration data across gateways 2100 and 2200, ensuring coordinated and synchronized management across the network.

The sitewide controller 2300 may receive user instruction data from configuration server 2500 or other connected cloud platforms, such as third-party application server 2400. The user instruction data may include network configurations, device assignment policies, and device-specific operational commands. By managing device assignment processes across gateways, controller 2300 reduces downtime during device transitions. The user instruction data may be similar to the user instruction data described in FIG. 1. The user instruction data can be transmitted from the cloud servers to the controller 2300. The controller 2300 then implements the user instruction data on the gateways.

In an embodiment, the configuration server 2500 can be connected to a user terminal (also referred to as user edge direct terminal) to provide a direct interface for system administrators or authorized users to access and manage the network in real time. The user terminal may be similar to the user terminal described in FIG. 1. The users can monitor network health, configure operational parameters, and deploy updates or patches from the user edge direct terminal. The interface can also be used to input user instruction data, such as device-specific configurations, network policies, or event triggers. The user instruction data can be translated by the configuration server 2500 into actionable configuration data. By enabling a real-time link between the user terminal and the configuration server 2500, the system 200 allows for responsive network adjustments, troubleshooting, and remote diagnostics, offering comprehensive control over the sitewide operations managed by the edge connect module within the sitewide edge connect controller 2300.

The controller 2300 aggregates the monitoring data including device health metrics, performance data, and diagnostic logs received from the connected gateways 2100, 2200. The controller 2300 transmits the monitoring data to the configuration server 2500 for centralized analysis. The consolidated view of network operations allows the configuration server 2500 to adjust configurations dynamically based on real-time network insights, enabling predictive maintenance, load adjustments, and rapid fault resolution. The sitewide controller reduces redundancy in data processing, optimizing network efficiency. Local processing of loT device data and the monitoring data can also be performed at the controller 2300 based on predefined rules. The controller can make immediate adjustments and optimizations independently of the configuration server 2500.

The third-party application server 2400 and hardware vendor server 2600 serve as external integration points within the loT network, providing connectivity to third-party applications and vendor-specific services. The servers 2400, 2600 may perform functions analogous to servers 1600, 1700 of FIG.1., such as receiving processed loT device data from gateways via the controller 2300 and generating application-specific commands. The third-party application server 2400 can provide external application interactions. The hardware vendor server 2600 can provide hardware-related configurations, such as firmware updates and diagnostics.

In an embodiment, security protocols are implemented within the sitewide edge connect controller 2300 to provide consistent data protection across the network. The controller 2300 manages authentication and encryption processes, providing secure data exchanges between gateways, cloud servers, and third-party services, such as application server 2400 and hardware vendor server 2600. Additionally, the centralized architecture improves interoperability with external platforms, enabling the controller 2300 to implement standardized protocols and security measures across the entire network.

In an embodiment, the edge connect module within the sitewide edge connect controller 2300 performs data filtering and formatting operations. As loT device data is received from loT devices 2010, 2020 through gateways 2100, 2200 to the controller 2300, the edge connect module applies filtering algorithms to remove redundant, incomplete, or unnecessary data, ensuring that relevant information is processed further. The streamlined data is then formatted into a standardized structure compatible with cloud-directed data protocols. In an embodiment, the gateways 2100, 2200 function as initial access points, providing data aggregation and routing capabilities as well as API support for external applications. Additionally, gateway(s) can relay data over TLS/TCP protocols to maintain secure data streams to the controller 2300.

In an embodiment, the edge connect module in the controller 2300 provides cloud configurable data processing, secure cloud integration, and distributed radio management. Cloud configurable data processing includes applying specific processing rules based on operational requirements or predefined rules, such as aggregating sensor data for analysis or preprocessing data to detect anomalies. For secure cloud integration, the edge connect module implements end-to-end encryption, enabling secure data exchanges with cloud-based servers like configuration server 2500. The distributed radio management coordinates radio resources across gateways 2100, 2200 to reduce interference and maintain stable connections with loT devices. The radio management includes controlling scanning intervals, frequency adjustments, and power settings at gateway level to ensure optimized, interference-free communication across the network. The gateways 2100, 2200 thereby function as localized radio nodes, while the controller 2300 maintains centralized oversight for seamless, distributed radio operations across the site.

The edge connect module can provide a unified connectivity function for seamless communication across distributed radio hardware, such as wireless access points (APs), dedicated loT gateways, or wireless bridges. The unified connectivity function can be implemented either on-premises or within a cloud-based architecture. The edge connect module coordinates communication with wireless devices across multiple use cases and protocols. For instance, the distributed radios in the gateways can communicate with Electronic Shelf Labels (ESLs) using Bluetooth Low Energy (BLE) 5.4 within the 2.4 GHz industrial-scientific-medical (ISM) band.

In certain implementations, the unified connectivity function is connected to an instance of edge direct routine of the edge connect module. The edge direct routine manages configuration settings and operational parameters for devices within the network. The integration enables the unified connectivity function to dynamically adjust configurations and apply policies across the distributed radio hardware, enhancing network adaptability and control.

The numbers of components shown in FIG. 2, including the sitewide edge connect controller 2300, IoT devices 2010, 2020, gateways 2100, 2200, and the external servers such as configuration server 2500, third-party application server 2400, and hardware vendor server 2600, are illustrative and not intended to be limiting. In practical deployments, there can be additional instances of component(s), with multiple controllers, IoT devices, gateways, and servers deployed based on the specific requirements of the environment. For example, a large-scale retail deployment might include numerous sets of gateways connected to respective controllers. A controller can be connected to other controllers, for example in mesh topology. Additionally, or alternatively, the controllers may be synchronized by means the cloud configuration server connected to controller(s). Similarly, additional servers can be integrated to manage higher volumes of data, provide redundancy, or support specialized functions within the network.

### Coordinating Scanning Parameters

The sitewide controller 2300 is configured to transmit a coordination signal to the first gateway and the second gateway. The first and second gateway can be part of the plurality of gateways connected to the controller 2300. The coordination signal configured to coordinate a discovery process (e.g., service discovery, device discovery and/or other discovery process) of the first gateway and the second gateway based on a scanning schedule providing coordinated scanning parameters of the first gateway and the second gateway. The coordinated scanning parameters can include one of substantially non-overlapping scanning parameters, staggered scanning parameters or substantially overlapping scanning parameters. In an example, the scanning parameters can include a scanning window and/or other parameter(s). The first gateway and the second gateway can be located within a proximity zone.

In an embodiment, the coordination signal is configured to provide that a target gateway operates on a scanning schedule. The scanning schedule includes assignments of scanning intervals, timing schedules, and advertising channels to gateway(s). The preset scanning schedule is configured such that gateways in proximity operate on different scanning intervals, timing schedules, and advertising channels, optimizing the coverage and efficiency of advertisement capture from loT devices. By distributing the scanning responsibilities among the gateways, the system reduces overlap and minimizes missed advertisements due to channel conflicts. Proximity between gateways may be determined based on pre-stored MAC addresses or virtual MAC (vMAC) addresses of neighboring gateways.

The preset scanning schedule can be received or updated by the cloud configuration server 2500 or through user instruction data from a user terminal. The cloud configuration server 2500 may transmit the preset scanning schedule as part of the configuration data to the controller 2300.

The sitewide controller 2300 is configured to transmit a suspension signal to one of the first gateway and the second gateway meeting a suspension criterion to suspend the discovery process at any one of the first gateway and the second gateway. The suspension criteria include a volume threshold of advertising messages received at one of the first gateway and the second gateway. The discovery process can include receiving a plurality of advertising messages at any one of the first gateway and the second gateway.

The suspension criterion is applied to optimize the discovery process and loT device data processing for connected loT devices. The controller 2300 is configured to dynamically adjust the discovery process of the gateways, including loT device data processing based on real-time network conditions and device attributes received through loT device data. For example, when the controller 2300 detects a high volume of advertising messages from loT devices, as compared to a volume threshold level set within the suspension criteria, the controller 2300 transmits a suspension signal directed to a gateway to selectively postpone specific sections of the discovery process that require longer processing times. The target sections or incoming loT device data for postponing may include device authentication checks, detailed capability inquiries, or secure key exchanges, which can be more time-intensive steps in establishing a connection.

### Coordination of Device Connections

The sitewide controller 2300 is configured to determine, whether an advertising message received at a first gateway from an IoT device meets a preset filtering criterion. The preset filtering criteria includes a minimum signal strength. Further, the sitewide controller 2300 is configured to transmit a coordination signal to the first gateway. The coordination signal is configured to establish a connection between the first gateway and the loT device if the advertising message meets the preset filtering criteria. Furthermore, the sitewide controller 2300 is configured to transmit a preset processing protocol to the first gateway when the connection between the first gateway and the loT device is established. The preset processing protocol includes a plurality of operational actions directed to the loT device. The preset filtering criteria is configured to enable the gateways establish connections with loT devices that meet the preset filtering criteria. The preset filtering criteria or the suspension criteria can be received from the controller 2300 and stored locally at the gateways for local execution. Alternatively, the controller 2300 can dynamically update the preset filtering criteria or the suspension criteria in real time, based on current network conditions, device density, or environmental factors. For example, higher received signal strength thresholds may be applied to channels or frequencies that experience elevated noise levels or increased channel activity.

In an embodiment, the controller 2300 coordinates to apply preset filtering criteria across the network. The controller 2300 in real-time communication with a plurality of gateways evaluates incoming advertising messages based on the preset filtering criteria, to determine the most suitable gateway for establishing the connection based on the preset filtering criteria. In an embodiment, the preset filtering criteria may include a cached history of preferred or previous connections between loT devices and gateways. In another embodiment, the controller 2300 applies the pre-approved connections and caching mechanisms to improve device connectivity.

### Network Health and Device Monitoring Data

In an embodiment, the controller 2300 is configured to generate network health data, including metrics such as packet loss, signal strength, response times, latency indicators, connection stability, connection failures, response failures, packet retries, and diagnostic error reports. The network health data can be generated for an individual gateway, where network health data may refer to as gateway health data. The network health data may also reflect an overall assessment of network conditions across all gateways. To generate network health data, the controller 2300 can aggregate the gateway data received from the gateway(s). The gateway data can include metrics to generate the network health data. Additionally, the controller 2300 integrates loT device data received from connected loT devices, capturing real-time signal strength, response times, and connectivity stability.

In an embodiment, the controller 2300 generates device monitoring data to assess the health and functionality of loT device(s) connected to the gateway(s). Device monitoring data can be generated by processing the loT device data received at the gateway(s) and further transmitted to the controller 2300.

The controller 2300 can transmit network health data and device monitoring data (collectively referred to as monitoring data) as part of cloud-directed data to the configuration server 2500 and application servers 2400 and 2600. The cloud servers may further transmit the network health data and device monitoring data to the users via user terminals.

### Device Assignment Routine

In an embodiment, the controller 2300 implements the device assignment process by transmitting a device assignment signal to a source gateway. The device assignment signal is configured to initiate a device assignment routine when a device assignment trigger is met at the source gateway. The device assignment trigger comprises at least one of a load-balancing event, a failover event, a roaming event, or a user-initiated event. The device assignment signal can be included in the coordination signal transmitted by the controller 2300 to the gateway(s).

The device assignment, process such as a handoff process, can include transferring an loT device connection from source gateway to a target gateway or assigning an loT device connection to a particular gateway using inter-gateway data or other communication.

The device assignment routine is executed by the controller 2300 connected to the gateway(s) for synchronized data exchange. The target gateway can be either pre-designated within the device assignment routine or dynamically selected based on target gateway selection parameters (or selection parameters) such as current load capacity, proximity to the loT device, received signal strength, device communication history, and available spectral resources. Within the device assignment routine, the controller 2300 receives the device details from the source gateway. The controller 2300 transmits the device information to the target gateway to enable the loT device to connect with the target gateway.

In an embodiment, the device monitoring data includes a cached history of preferred or previous connections between loT devices and gateways. Further, a preferred connection between the device and gateway can prestored within the controller 2300 or the cloud configuration server 2500. In an embodiment, the controller 2300 stores connection data for specific device types or models, associating it with identifiers within the preset filtering criteria. The cached history of preferred or previous connections can be synchronized by the controller 2300.

When a device assignment event occurs due to a failover scenario, such as a gateway failure, the controller 2300 will notify other connected gateways via coordination signal to take over the device connections maintained by the inactive gateway. The device details, including the vMAC addresses and/or identifier(s) of the loT device(s), is dynamically distributed to the target gateway(s). The device information can be included in the coordination signal.

In an embodiment, the device assignment routine within the controller 2300 applies preset filtering criteria and other selection parameters to identify the target gateway for the device assignment.

In an embodiment, the device assignment routine is executed by the controller 2300 to manage device connection transitions during the initial stages of connection building such as when advertising messages are actively being processed.

The device assignment routine uses coordination signals to transfer parameters relevant to the PAwR communication from the source gateway to the target gateway.

In an embodiment, the device assignment trigger is based on load balancing criteria derived from network health data and device monitoring data. The load-balancing event occurs in response to the gateway health data of the source gateway exceeding load thresholds. The load thresholds (or load balancing criteria) includes metrics exceeding predefined load thresholds based on network health data and device monitoring data.

In an embodiment, the selection of a subset of loT devices to assign from one gateway to another during load balancing may be based on a set of predefined parameters determined by the synchronized controller 2300.

In an embodiment, the device assignment trigger is initiated by a gateway failover event where an entire group of connected loT devices is reassigned to another gateway. The failover trigger is activated when a gateway experiences an unexpected failure, rendering it inactive, or during planned maintenance that requires the gateway to temporarily go offline. The device assignment trigger for such an event can include the gateway's inactive status, detected through indicators from network health data or device monitoring data, or an upcoming scheduled maintenance period.

In an embodiment, the device assignment trigger includes a roaming event initiated when an loT device physically moves within the network, shifting the device proximity from one gateway to another. The roaming event occurs in response to the sitewide controller determining, based on gateway data received from the target gateway, that the target gateway is receiving a stronger signal from the loT device compared to the source gateway.

In an embodiment, the device assignment triggers and device assignment criteria are based on instructions received from the cloud servers through configuration data or user instruction data. Alternatively, device assignment triggers and criteria can be stored at the controller 2300, to enable autonomous device assignment routines in response to real-time conditions.

Referring now to FIG. 3, shown therein is an illustrative block diagram of the edge connect module 300, according to an embodiment.

In an embodiment, the edge connect module implements a flexible, multi-vendor edge framework that supports a range of loT devices 3010, 3020 managed through vendor-specific edge applications and common device recipes. The edge connect module can be the edge connect module 1112 of FIG. 1, or the edge connect module in the sitewide controller of FIG. 2. The technical architecture includes an edge management system where the edge connect module operates as the central node, orchestrating communication, processing, and operational control across diverse devices and applications from different vendors.

In an embodiment, the edge connect module serves as a centralized layer that hosts vendor-specific edge applications, such as vendor A edge application 3050 and vendor B full edge application 3060. The application(s) includes a distinct edge application logic component, such as edge application logic 3052 within vendor A's application and edge application logic 3062 within vendor B's application. The components 3050, 3052, 3060, and 3062 handle the specific operational and processing requirements specified by a vendor. By situating the edge application logic within the edge connect module, the architecture provides that device-specific operations, such as data processing, event handling, and device status management, can be tailored for a vendor without needing separate physical infrastructure.

The common device recipes 3070 are managed by the edge connect module. The common device recipes 3070 represent pre-configured operational workflows that define actions or sequences, such as onboarding routines, control commands, and data preprocessing steps, that can be applied universally across different device types 3010, 3020 and vendor applications 3050, 3060. The edge connect module executes these recipes as templates that standardize operations across loT devices (such as devices 3010 for vendor A and 3020 for vendor B), allowing consistent functionality regardless of the specific edge application logic in use. The centralized recipe management reduces redundant processing and promotes operational uniformity across the network.

The recipes represent self-contained blocks of logic tailored to manage device-specific characteristics including proprietary protocols and unique identifiers. The recipes align the device-specific characteristics with the standardized formats used by the platform. Through recipes, the edge connect module supports both vendor-specific and universally applicable configurations, enabling robust, adaptable, and scalable device management. A recipe can function autonomously or in conjunction with other recipes, allowing for flexible and layered device interactions. A device recipe, for instance, is used to translate loT device-specific data, such as unique sensor addresses or proprietary data structures, into platform-compatible formats. The process ensures that device-specific information is uniformly represented within the platform's data schema, regardless of a device's unique protocol requirements. For example, the edge connect module can use a device recipe to interpret a proprietary data stream from a sensor and convert it into a standardized event stream. This event stream can then be processed or transmitted according to common protocols, making the device's data accessible and usable within the platform's ecosystem. The platform can be the Edge Connect platform.

Similarly, edge application logic recipes 3052, 3062 allow the edge connect module to interpret and convert the standardized data streams into actionable events that can be communicated to enterprise applications hosted in the cloud including applications managed by vendors or end-users. The recipes provide the translation and control logic such that the data gathered from loT devices can be seamlessly integrated with enterprise systems. For vendors or third parties who deploy specialized devices, a full edge application recipe integrates both the device-specific and application-specific logic.

Recipes, as implemented within the edge connect module, can be provided by device manufacturers, platform operators, or end-users.

The edge connect module also includes a device communication component 3064 within vendor B's application that manages protocol translation and secure data forwarding. The device communication component 3064 enables seamless interoperability by handling the specific data formats, encryption protocols, and communication standards required by a vendor's devices. For example, the device communication 3064 in vendor B's application provides that IoT devices 3020 can transmit data to and receive commands from the edge system using protocols optimized for these devices 3020, while adhering to the security and formatting requirements set by the edge connect module.

The technical architecture allows for the integration of additional vendor-specific applications into the edge connect module. As new edge applications are added, the common device recipes 3070 can be dynamically updated or extended to include additional operational workflows. For instance, if a new vendor's devices require custom onboarding steps or specific data preprocessing, the edge connect module can update the recipes accordingly.

Furthermore, the edge connect module is configured to support real-time data management and secure cloud integration. For scenarios requiring immediate processing, the edge connect module can locally handle priority functions, such as data filtering or device coordination, within an edge application logic. When cloud-based processing is required, selected data streams can be forwarded to cloud-based configuration or application servers (such as the configuration server 1500 or third-party application servers 1600, 1700) without interrupting local device operations. This operation allows the system to balance edge and cloud processing based on operational needs, enabling low-latency decision-making at the edge while providing comprehensive analysis in the cloud.

The edge connect module utilizes recipes as modular, revision-controlled configurations to enable seamless interactions between connected loT devices and the network. Within this framework, the edge connect module operates as an instance within the edge architecture, functioning as an intermediary layer that manages and standardizes communication between diverse loT devices, such as devices 3010 and 3020, and the network.

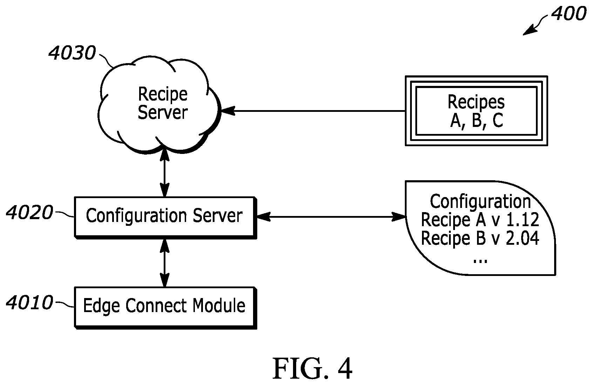

Referring now to FIG. 4, shown therein is an illustrative block diagram of the loT wireless network management system 400, according to an embodiment.

In an embodiment, the edge connect module 4010, configuration server 4020, and recipe server 4030 coordinate to manage recipe configurations in a centralized and version-controlled manner.

The edge connect module 4010 operates as the operational core to execute a configuration of recipes that define specific tasks and processes within the loT network. A configuration is a curated collection of recipes, such as recipes A, B, and C, that are collectively designed to perform a comprehensive set of actions across devices (not shown) connected to the edge connect module 4010. The configurations allow a variety of combinations of recipes to be tailored for specific operational needs across different instances of the edge connect module 4010.

The configuration server 4020 operates as an intermediary control node, providing for the deployment and synchronization of recipe configurations within the network. The configuration server 4020 manages the interaction between the edge connect module 4010 and the recipe server 4030, providing that the most up-to-date recipes are consistently available across all edge instances. The configuration server 4020 retrieves configurations and their associated recipes from the recipe server 4030, maintaining version accuracy and alignment with the latest recipe updates. The configuration server 4020 may be connected to a user terminal (not shown). Through the user terminal, users can initiate configuration updates, view recipe versions, adjust operational parameters, and deploy new recipes across edge connect module instances, enabling precise control and responsive adjustments to the loT network.

The recipe server 4030 (also referred to as the edge direct functionality) operates as the centralized repository for recipes and can maintain version-controlled instances of a recipe. The central storage provides that configurations executed by the edge connect module 4010 are based on the latest recipe logic and standards to provide stability and uniformity across multiple instances of the edge connect module. When an update or modification is made to a recipe, the recipe server 4030 manages the versioning, allowing the configuration server 4020 to access and distribute the most recent, verified versions.

In operation, the configuration server 4020 communicates with the recipe server 4030 to request and retrieve specific recipes included in a configuration. For instance, when the edge connect module 4010 requires an updated configuration, the configuration server 4020 will query the recipe server 4030 for the latest versions of recipes A, B, and C. The recipe server 4030 processes the query by identifying and providing the current versions, such as version 1.12 of recipe A and version 2.04 of recipe B, to the configuration server 4020. The architecture enables the system 400 to dynamically adapt to changing operational requirements without manually updating a individual edge connect instance.

Upon receiving the updated configuration, the edge connect module 4010 loads and initializes the recipes as directed by the configuration server 4020. The edge connect module 4010 utilizes the recipes to execute edge-level operations, including data processing, protocol translation, and device coordination as specified within a recipe. By loading recipes in real time, the edge connect module provides responsiveness and adaptability to manage a range of tasks while minimizing latency.

The centralized configuration and recipe management approach allows for the scalable deployment of edge functionalities across numerous sites and devices. For example, a single change to a recipe within the recipe server 4030 can propagate through the configuration server 4020 to all instances of the edge connect module 4010 that rely on that recipe. The propagation provides that all connected loT devices and applications consistently operate on the latest configuration standards, providing uniformity across large-scale loT networks.

In scenarios where custom or vendor-specific operations are required, the edge connect module 4010 can process specific configurations by selectively loading relevant recipes stored in the recipe server 4030. For instance, a specific configuration for vendor A's devices might include customized recipes that address proprietary communication protocols or device-specific preprocessing steps. Similarly, standardized configurations can be used to maintain common device functions across different deployments for interoperability while allowing for targeted customizations when necessary.

Additionally, by separating recipe storage and execution into discrete server functions, the architecture reduces operational redundancy and optimizes resource usage across the network. The recipe server 4030 provides a single point of control for recipe versioning and distribution. The edge connect module 4010 performs the edge-processing and device-management functions.

In an embodiment, the edge connect module 4010 can represent the edge connect module 1112 of FIG. 1, or the edge connect module in the sitewide controller of FIG. 2, depending on deployment requirements. In an embodiment, the configuration server 4020 is the cloud configuration server 1500 of FIG. 1, or the configuration server 2500 of FIG. 2. The architecture of FIG. 4 can integrate within the larger system architecture shown in FIG. 1 or FIG. 2, where the edge connect module 4010 operates alongside gateways, loT devices, and cloud-based servers. Although the specific devices and gateways are not shown in FIG. 4, they are present within the broader system, connecting through the edge connect module 4010.

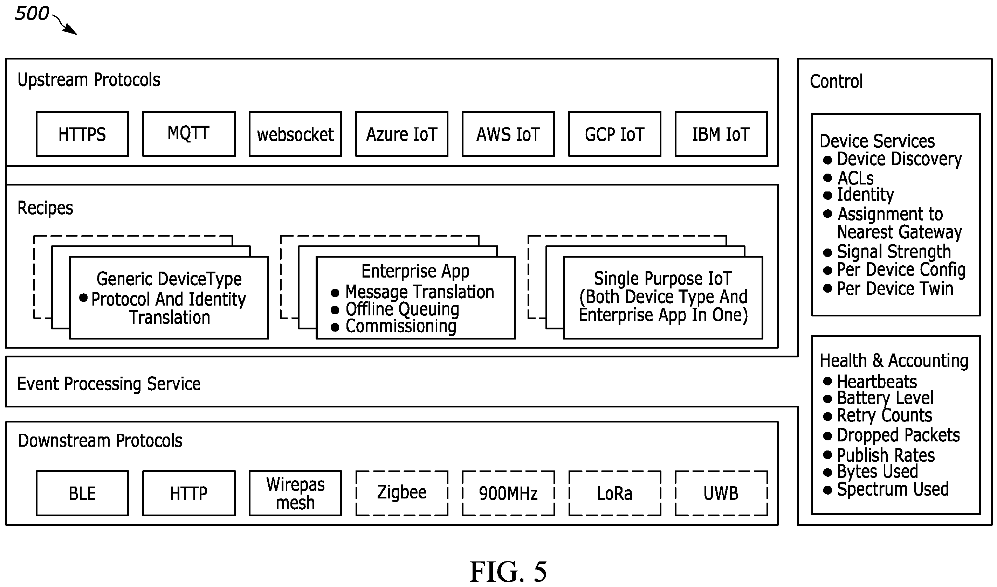

Referring now to FIG. 5, shown therein is an illustrative block diagram of the loT edge connectivity framework 500, according to an embodiment.

The "Upstream Protocols" (e.g., HTTPS, MQTT, WebSocket, Azure IoT, AWS loT, GCP loT, IBM loT) represent the connectivity pathways from the edge connect module (as described in Fig. 1 or Fig. 2) to cloud-based platforms and services in the cloud analysis layer. The protocols enable secure and structured data transmission to the cloud, where data can be further processed, analyzed, and stored. For instance, MQTT and HTTPS are used to transmit cloud-directed data from the edge. The cloud-directed data includes device metrics, status updates, and event-triggered messages. The integration of specific vendor platforms, such as Amazon Web Services loT (AWS loT), Google Cloud Platform loT (GCP loT), and International Business Machines loT (IBM loT), allows the edge connect module to interact seamlessly with cloud services from different providers, enabling flexibility in managing multi-vendor loT networks.

The "Recipes" layer provides pre-configured workflows or templates that define operational logic and enable the translation of device-specific data formats and protocols into standardized formats compatible with the platform. Recipes in this context are similar to those described in Fig. 3, executed by the edge connect module to coordinate device operations. Fig. 5 illustrates several categories of recipes:
Generic Device Type: This recipe manages "Protocol and Identity Translation," allowing the edge connect module to normalize data from heterogeneous loT devices (e.g., sensors, actuators). For instance, a BLE temperature sensor's data can be translated into a unified format before being sent upstream, making it compatible with centralized analysis.

Enterprise App: Recipes within the Enterprise App category support complex operations such as message translation, offline queuing, and commissioning of devices. The Enterprise App recipe enables interoperability with enterprise applications by translating raw loT data into actionable insights, even supporting queuing when connectivity is intermittent.

Single Purpose loT: The recipe represents a combined logic for both "Device Type and Enterprise App in one," simplifying the configuration for specialized loT devices that perform dedicated functions. The recipes streamline the edge-to-cloud data flow by consolidating protocol handling and enterprise logic within a single recipe structure.

The "Event Processing Service" layer represents the real-time handling of events generated by loT devices. Managed by the edge connect module, the event processing service processes events from loT devices (such as anomaly alerts or status updates) and applies predefined rules or triggers. For instance, if a temperature sensor transmits a reading beyond a threshold, the edge connect module can initiate a corresponding action, such as sending a command to an actuator to adjust environmental controls.

The "Downstream Protocols" (e.g., BLE, HTTP, Wirepas Mesh, Zigbee, 900MHz, LoRa, UWB) facilitate communication from the edge connect module to loT devices at the network edge. For example, the downstream protocols may apply between the perception layer 1002 and network layer 1004 of FIG. 1. The downstream protocols allow the edge connect module to communicate with diverse loT devices, providing compatibility with various wireless standards used across different deployment environments. For instance, BLE and Zigbee are often utilized for short-range, low-power sensor networks, while LoRa and 900MHz may support long-range, low-bandwidth communication with remote devices.

The "Control Panel" refers to the comprehensive control and monitoring functionalities. Device Services functions includes device discovery, access control lists (ACLs), identity management, assignment to nearest gateway, signal strength tracking, per-device configurations, and device twin functionality. The device services enable the edge connect module to manage device lifecycles, providing that a loT device is authenticated, assigned to an optimal gateway, and configured as needed. For example, when a new device joins the network, the edge connect module handles its discovery, validates its identity, and assigns it to the nearest gateway based on signal strength and network load.

The "Health & Accounting" can refer to the monitoring data generated by edge connect module in FIG. 1. The monitoring data includes metrics such as heartbeats, battery level, retry counts, dropped packets, publish rates, bytes used, and spectrum usage are tracked. The monitoring data is generated by the edge connect module and provides real-time visibility into device health and network performance to support maintenance and diagnostic processes. For instance, the edge connect module may flag devices with low battery levels or high retry counts, allowing pre-emptive maintenance or adjustments to network configurations.

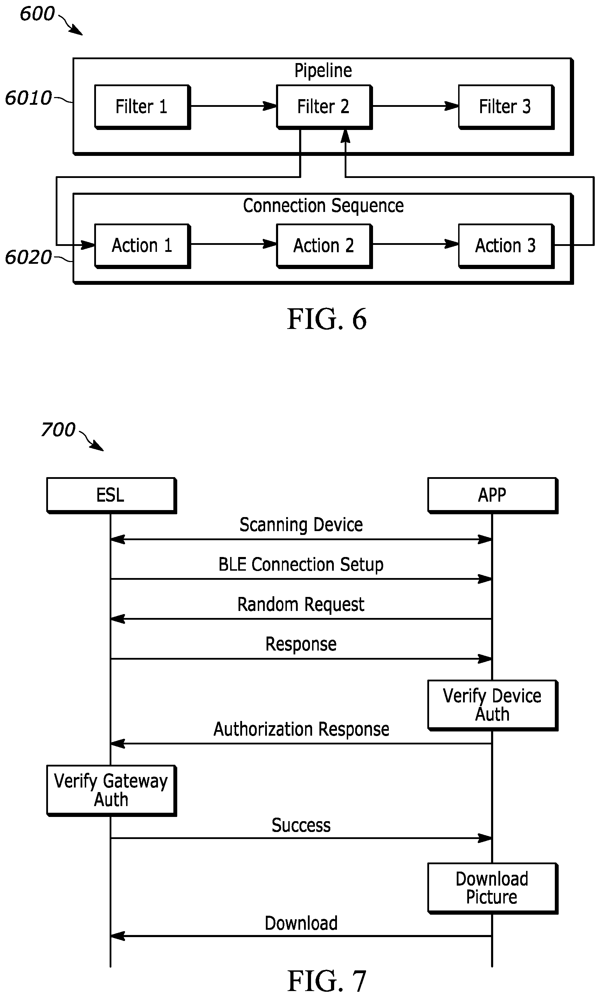

Referring now to FIG. 6, shown therein is an illustrative flow chart of the event detection and trigger mechanism 600, according to an embodiment.

In an embodiment, the edge connect module provides for event detection, filtering, and action triggering based on a structured pipeline and connection sequence. The edge connect module enables a streamlined process to detect and respond to asynchronous events that flow through the network.

In this embodiment, the Pipeline 6010 comprises sequentially arranged filters performing specific operations on incoming events. For example, at Filter 1, events such as Bluetooth Low Energy (BLE) advertisements, messages from the cloud analysis layer 1006, or inter-pipeline messages enter the pipeline for initial screening. Filter 1 serves as the gateway, assessing event relevance and verifying that pertinent data proceeds further. Upon successful passage, an event enters Filter 2, where intermediate processing occurs. Here, Filter 2 may adjust the event parameters or append additional metadata, effectively preparing the event for subsequent action. The Filter 2 can be configured to alter the internal state of the edge connect module, impacting other connected loT devices or system processes in real-time. Thereafter, events arrive at Filter 3, the concluding stage in the pipeline. The Filter 3 determines if the event meets all necessary criteria to initiate a response in the Connection Sequence 6020. Filter 3 can either conclude the pipeline 6010 by terminating unnecessary events or emit refined events that may trigger new filters or connection sequences.

The Connection Sequence 6020 follows the filtering process as a series of actions that are triggered once an event successfully completes the pipeline 6010. The Connection Sequence 6020, illustrated as Action 1, Action 2, and Action 3, represents a controlled progression of responses, the action(s) intended to interact with devices or the platform in a defined order. Action 1 initiates by establishing a connection with an IoT device such as a BLE device that has signaled its presence. Action 1 may include configuring specific read/write characteristics on the target device, effectively setting up the parameters for communication. Once connected, the process moves to Action 2, where the edge connect module enables notifications or continuous updates from the device. Action 2 may include entering a state that listens for periodic data, thereby enabling real-time monitoring of device status. Lastly, Action 3 finalizes the communication process, allowing the edge connect module to adjust operational settings or send configuration updates as required. Additionally, Action 3 may emit further events, looping them back into other pipelines or connection sequences to create an adaptive feedback loop that improves the system's responsiveness and adaptability.

The Pipeline 6010 and the Connection Sequence 6020 may operate asynchronously. Events such as BLE advertisements, cloud messages, and inter-pipeline communications flow through the system independently, allowing the edge connect module to operate based on a set of predefined rules. Predefined rules are system-configured instructions within the edge connect module that establish how incoming events, such as device status updates, BLE advertisements, or cloud messages, should be processed, filtered, and action sequences to follow. The predefined rules include actions such as triggering specific workflows, adjusting device settings, or activating control sequences based on context and operational requirements. For example, BLE advertisements received from devices in the perception layer 1002 provide updates on device status or location, which the pipeline processes to initiate relevant connection sequences. Similarly, configuration data, as described in FIG. 1, may carry directives that alter the behavior of connected loT devices or initiate real-time configurations within the system. A filter within the pipeline can modify events to meet specific operational needs, while the connection sequences trigger complex, context-sensitive actions on the target devices.

The pipeline and connection sequence model allows for variations and adaptations, to improve the flexibility of the event detection and action-triggering process. The pipeline and connection sequence structure can dynamically adjust to real-time changes in network conditions or device status, permitting new filters or actions to be added without disrupting ongoing operations. Additionally, the pipeline can include conditional loops, where filters or actions maintain a monitoring or wait state until specified conditions are met. For example, the edge connect module may use Filter 2 to assess the event frequency and determine whether a notification loop should continue based on data patterns.

The interconnected pipeline of filters and sequential connection model, the system can implement a mechanism for processing, filtering, and triggering responses to loT events disclosed in other embodiments. The architecture enables efficient real-time interaction between the cloud analysis layer 1006, the intermediate network layer 1004, and the loT devices within the perception layer 1002 as illustrated in FIG. 1. For example, the perception layer 1002, comprising a multitude of loT devices like BLE-enabled sensors, actuators, and Electronic Shelf Labels (ESLs), continually transmits loT device data including status updates, sensor readings, and control signals that initiate a range of activities at the edge level. The edge connect module is configured to operate as a central processor of loT device data, filtering and coordinating events through the structured Pipeline 6010. When events are filtered through Pipeline 6010, the events are shaped and transformed according to the system's predefined rules, enabling the edge connect module to prioritize, alter, or enrich an event's content before advancing the event to a Connection Sequence 6020. The Pipeline 6010 and the Connection Sequence 6020 enables actions such as protocol translation, device authentication, and real-time configuration changes to be executed in direct response to event triggers. The configuration server 1500 further improves process by transmitting configuration data that dynamically updates the pipeline parameters and connection sequences at the gateway level. Additionally, user instruction data received from a user terminal can influence the behavior of these pipelines and sequences by adjusting device-specific rules, triggering custom event responses, or altering threshold parameters in real-time.

Referring now to FIG. 7, shown therein is an illustrative flow chart of the event detection and trigger mechanism 700, according to an embodiment.

The mechanism 700 involves an Electronic Shelf Label (ESL) and an application on a gateway, according to an embodiment. The mechanism 700 illustrates a multi-step authentication and communication process that enables secure interactions and data exchange between the ESL and the application on the gateway, as coordinated by the edge connect module.

The mechanism 700 includes the application scanning for BLE advertising messages broadcast by the ESL, thereby allowing the system to identify and establish preliminary communication with nearby loT devices. The scanning action serves as the first step in the connection sequence, with the edge connect module continuously monitoring for the advertisements, effectively facilitating the identification of IoT devices in proximity. The application may reside on the edge connect module, operating as part of the intermediate network layer that facilitates interaction with the ESL at the perception layer.

Upon detecting the ESL's BLE advertisement, the edge connect module initiates a BLE Connection Setup between the ESL and the application, enabling a secure, low-latency communication channel. The connection setup process provides a direct pathway for subsequent data exchange and authentication procedures. As part of the BLE Connection Setup, the system may conduct a handshake to confirm the readiness of both the ESL and application to proceed.

The application then sends a Random Request to the ESL, transmitting a first randomly generated number to initiate a challenge-response protocol. The exchange may form the first layer of the authentication mechanism within the connection sequence. The ESL responds with a Response message including a second random number along with first authorization information, which is then processed by the application. The authorization information, managed by the edge connect module, allows the application to conduct a preliminary verification of the ESL's identity, confirming its legitimacy before proceeding further.

In the Verify Device Authentication process, the application utilizes the random numbers and authorization information provided by the ESL to perform a device authentication check. The verification confirms the ESL's identity against stored device profiles within the gateway, providing that authorized devices can proceed with the interaction. Following successful device authentication, the application transmits an Authorization Response including additional authentication credentials, signaling the ESL to verify the application's authenticity. The ESL executes a Verify Gateway Authentication step to confirm the gateway's identity and its permissions, establishing a two-way trust between the gateway and the loT device. The bidirectional verification provides for secure data transactions and enables that trusted gateways and applications to control or interact with loT devices in the system.

Upon successful verification, the connection sequence reaches a Success state to complete the authentication process and establishing a trusted communication channel between the ESL and the application. At this point, the edge connect module allows the application to initiate data transmissions securely, having met all prerequisites for an authenticated session.

In the present embodiment, the final step in the connection sequence includes a Download Picture command, where the application transfers image data, such as a product image or promotional graphic, to the ESL. The transfer of image data initiates real-time updates to the ESL's display, improving the device's utility in environments like retail stores. The downloaded content, typically visual information associated with the ESL, is stored and rendered by the ESL in response to the application's command, allowing for dynamic and immediate updates that reflect inventory or promotional changes.

This workflow illustrates the edge connect module's capability to manage complex, multi-step interactions between loT devices and gateway applications, combining secure authentication, data exchange, and real-time updates. Additionally, variations in this connection sequence may include additional layers of verification, dynamic re-authentication based on session duration, or conditional access restrictions based on the user instruction data from a user terminal. User instruction data, when provided, may influence the authentication protocols or dictate specific actions post-authentication, enabling tailored workflows that can adapt to changing operational requirements or user preferences.

The mechanism 700 can be implemented within the larger loT architecture described in FIG. 1 and FIG. 2. The edge connect module may coordinate the sequence, overseeing event detection, authorization verification, and the data flow between the ESL and application. The loT device data (e.g., BLE advertisements and status updates) generated by the ESL is processed through the edge connect module's pipeline for authentication and authorization before any action is taken. The gateway data includes the authorization and verification exchanges that uphold secure communication. The cloud servers, such as the configuration server, may provide updated protocols or instructions to the edge connect module to influence the authentication or data-transfer processes.

In an embodiment, the edge connect module can refer to the edge connect module 1112 of FIG. 1, or the edge connect module in the sitewide controller of FIG. 2, depending on deployment requirements. Although the specific devices and gateways are not shown in FIG. 7, they are present within the broader system, connecting through the edge connect module.

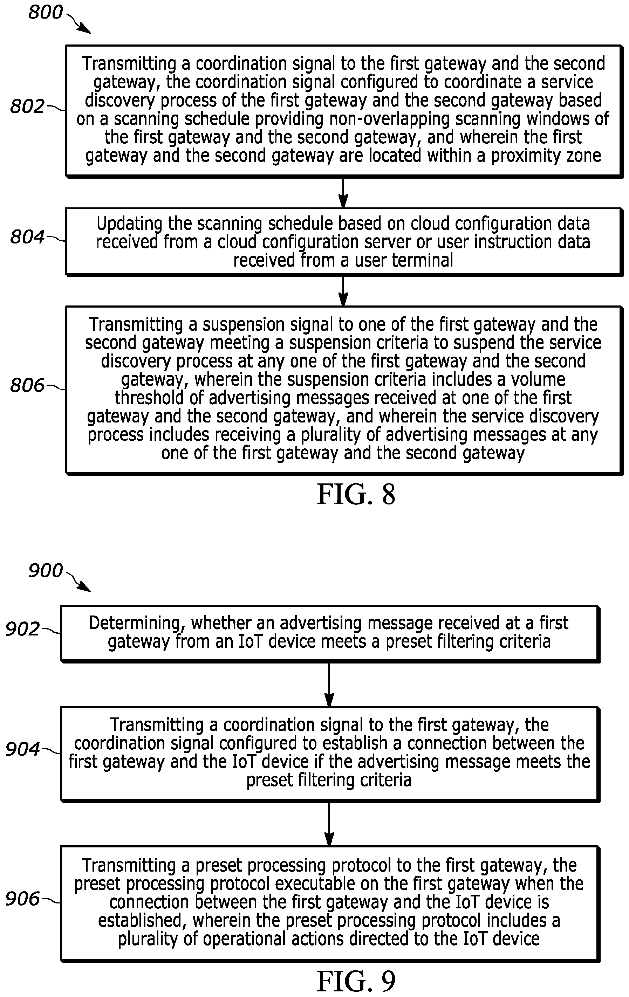

Referring now to FIG. 8, shown therein is an illustrative flow chart of a sitewide configuration method 800, according to an embodiment.

At 802, the method includes transmitting a coordination signal to the first gateway and the second gateway, the coordination signal configured to coordinate a discovery process (e.g., service discovery process, device discovery process and/or other discovery process) of the first gateway and the second gateway based on a scanning schedule providing coordinated scanning parameters of the first gateway and the second gateway. The coordinated scanning parameters can include one of substantially non-overlapping scanning parameters, staggered scanning parameters or substantially overlapping scanning parameters. In an example, the scanning parameters can include a scanning window and/or other parameter(s). The first gateway and the second gateway are located within a proximity zone.

The advertising message data from loT devices includes device-specific details such as Media Access Control (MAC) addresses, virtual MAC (vMAC) addresses, signal strength, device type, firmware version, battery status, service UUIDs, proximity information, sensor readings, and operational state indicators.

At 804, the method includes updating the scanning schedule based on configuration data received from a cloud configuration server or user instruction data received from a user terminal.

At 806, the method includes transmitting a suspension signal to one of the first gateway and the second gateway meeting a suspension criteria to suspend the discovery process at any one of the first gateway and the second gateway, wherein the suspension criteria includes a volume threshold of advertising messages received at one of the first gateway and the second gateway, and wherein the discovery process includes receiving a plurality of advertising messages at any one of the first gateway and the second gateway.

The scanning schedule includes assignments of scanning intervals, timing schedules, and advertising channels.

The suspension signal is configured to suspend a plurality of low-priority discovery processes at one of the first gateway and the second gateway. The plurality of low-priority discovery processes includes authentication checks, detailed capability inquiries, or secure key exchanges.

The suspension criteria include minimum signal strength threshold, device priority, battery level, and device classification.

The first gateway and the second gateway are determined in a same proximity zone based on virtual MAC (vMAC) addresses assigned to a gateway and correlated to a mapping framework identifying a list of proximate gateways.

The sitewide controller is connected to a plurality of gateways are divided into a plurality of zones.

The method further includes organizing the preset scanning schedule into a grid-like scanning pattern across the network, designating alternating gateways to operate within distinct scanning intervals to minimize overlap and optimize resource allocation.

The preset filtering criteria applied in the method may include a minimum signal strength threshold to prioritize connections with devices that have stronger signals and higher signal-to-noise ratios (SNR). The filtering criteria further include vMAC addresses, serving as virtual identifiers assigned to loT devices. In another embodiment, the preset filtering criteria include a cached history of preferred or previous connections between loT devices and gateways. If an advertising message from the same device is received by multiple gateways, the connection is prioritized with the gateway to which the device previously connected. A preferred connection history between the device and gateway may also be stored within the gateways or at the cloud configuration server, facilitating prioritized device connection processes.

Referring now to FIG. 9, shown therein is an illustrative flow chart of an advertising message filtering method 900, according to an embodiment.

At 902, the method includes determining, whether an advertising message received at a first gateway from an loT device meets a preset filtering criteria.

The advertising message data from loT devices includes device-specific details such as Media Access Control (MAC) addresses, virtual MAC (vMAC) addresses, signal strength, device type, firmware version, battery status, service UUIDs, proximity information, sensor readings, and operational state indicators.

At 904, the method includes transmitting a coordination signal to the first gateway. The coordination signal is configured to establish a connection between the first gateway and the loT device if the advertising message meets the preset filtering criteria.

At 906, the method includes establishing a connection between the gateway and the loT device if the advertising message meets the preset filtering criteria. The connection establishment process includes verifying device attributes against the preset filtering criteria and ensuring compliance with security and network protocols.

At 908, the method includes transmitting a preset processing protocol to the first gateway. The preset processing protocol is executable on the first gateway when the connection between the first gateway and the loT device is established. The preset processing protocol includes a plurality of operational actions directed to the loT device.

The operational actions may include display instructions, such as display instructions, updating Electronic Shelf Label (ESL) information, receiving and processing sensor data, transmitting actuator control signals, performing device diagnostics, updating firmware or software configurations, generating alerts or notifications, executing commands for device status updates, or synchronizing data logs with connected gateways or cloud systems. These operational actions may also include adjusting communication parameters such as data transmission intervals, battery-saving measures, or prioritization of high-importance device tasks to optimize network performance and ensure seamless device functionality.

The method further includes updating the preset filtering criteria based on user instruction data received from a user terminal. The filtering criteria and processing protocols can also be modified dynamically through configuration data or user instruction data transmitted from a configuration server, allowing for adjustments to be made based on changing network conditions or policies.

The method further includes establishing a connection with loT devices based on an approved device list that includes eligible devices according to allowed identifiers, such as vMAC addresses, device types, or service identifiers. For example, when an advertising message includes a vMAC address or device identifier that matches an entry on the approved list, the device is permitted to connect to the network. The approved device list can be updated through configuration data from the configuration server, which adjusts parameters or adds new device entries as network or security requirements evolve.

In another embodiment, the method further includes prioritizing connections based on a cached history of preferred or previous connections between loT devices and gateways. When the same device's advertising message is received by multiple gateways, the method prioritizes connecting the device to the gateway it had previously connected with, if available. Cached connection data may also be stored within the gateways or the configuration server, enhancing the discovery process by reusing details from previous connections.

The method includes applying preset filtering criteria to detect unauthorized or imposter devices attempting to connect. The filtering criteria include imposter data indicators, such as irregular time intervals between advertising messages, inconsistent signal strengths, absence of any cached previous connection, unrecognized device types, and identifiers previously flagged as imposters.

The method also includes performing deduplication of loT device data by parsing and deduplicating advertising messages received from the same loT device across multiple gateways. The deduplication process includes extracting identifiers, such as MAC or vMAC addresses, to detect if the messages originate from the same loT device. In event of duplicate packets being identified by matching vMAC addresses, the method includes merging these packets or eliminating unnecessary copies for efficient processing.

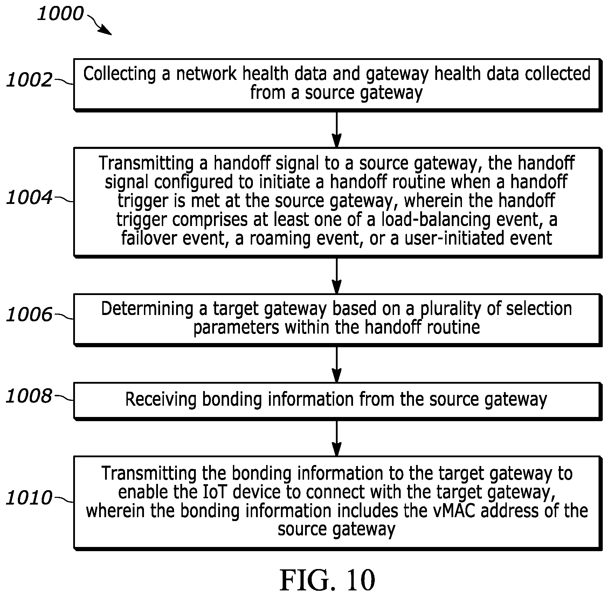

Referring now to FIG. 10, shown therein is an illustrative flow chart of an example device assignment method, such as a handoff method 1000, according to an embodiment.

At 1002, the method includes collecting a network health data and gateway health data collected from a source gateway. The network health data includes metrics such as packet loss, signal strength, response times, latency indicators, connection stability, connection failures, response failures, packet retries, diagnostic error reports, data consumption, noise levels across communication channels, and spectral capacity. Additionally, the network health data may include measurements of network noise, which indicates interference across channels due to factors such as external radio frequency interference or overlapping signals from nearby devices, and spectral capacity.

The method further includes generating device monitoring data to assess a loT device's health and functionality connected to the system. The device monitoring data includes metrics such as battery levels, signal strength, communication logs, status reports, performance metrics, connectivity states, error logs, uptime, and other operational metrics relevant to the device's availability and health.

At 1004, the method includes transmitting a device assignment signal to a source gateway, the device assignment signal configured to initiate a device assignment routine when a device assignment trigger is met at the source gateway, wherein the device assignment trigger comprises at least one of a load-balancing event, a failover event, a roaming event, or a user-initiated event. For a load-balancing event, the trigger occurs when network load exceeds load thresholds defined within network health or device monitoring data, such as high CPU usage, memory consumption, or congestion metrics. In a failover event, the device assignment trigger is activated by the unexpected failure or planned maintenance of a gateway, prompting the reallocation of connected IoT devices. A roaming event is triggered when an IoT device physically moves within the network, changing its proximity from one gateway to another detected through a stronger signal at the target gateway. User-initiated events allow manual initiation of device assignment to a target gateway based on user input.

At 1006, the method includes determining a target gateway based on a plurality of selection parameters within the device assignment routine.

At 1008, the method includes receiving device details from the source gateway. Device details includes data that represents the connection state and/or identifiers of an loT device, representing the parameters necessary to establish, maintain, or recognize the device's connection with a gateway. Device details can include data elements such as vMAC addresses, timing data, device-specific identifier(s), identifier(s) associated with a plurality of devices, encryption keys, communication states, device status indicators, and protocol versions required for maintaining the device connection without disruption. The device details are transferred via inter-gateway data from the source gateway, or otherwise provided, to the target gateway, allowing the target gateway to assume the connection state of the device. Alternatively, the device details can be exchanged through a sitewide controller connected to both the source and target gateways.

At 1010, the method includes transmitting the device details to the target gateway to enable the loT device to connect with the target gateway, wherein the device details includes the vMAC address of the source gateway.

The method further includes, in cases of device assignment triggers such as user-initiated, cloud-initiated, load balancing, or roaming events, using the device assignment routine to instruct the source gateway to stop its connection attempts or communications with the designated loT device while concurrently assigning the target gateway to assume connectivity responsibilities. In the context of a failover scenario, the method includes notifying connected gateways to take over the device connections from an inactive gateway, transferring device details, such as vMAC addresses and/or device identifier(s), to the designated gateways.

In an embodiment specific to Periodic Advertisement with Response (PAwR) communication, the method includes coordinating the transfer of connection responsibilities during ongoing PAwR sequences. The method further includes synchronizing parameters such as timing offsets and channel hopping sequences between the source and target gateways to maintain seamless PAwR transmissions, ensuring uninterrupted connectivity.

The various embodiments described herein are not mutually exclusive and may be combined or implemented in any suitable manner to achieve the desired functionality. Variations, modifications, and equivalents to the disclosed embodiments are possible without departing from the scope of the disclosure. For example, components, data exchanges, and processes described in one embodiment may be adapted or utilized in another embodiment to provide enhanced functionality. Additionally, steps or operations attributed to one component may, in certain implementations, be performed by another component or distributed across multiple components. Such combinations, modifications, and alternative implementations are intended to be within the scope of the disclosure.

## Claims

1. A sitewide controller device configured to:
collect network health data and gateway health data from a source gateway;
transmit a device assignment signal to a source gateway, the device assignment signal configured to initiate a device assignment routine when at least one device assignment trigger criteria is satisfied at the source gateway, wherein the device assignment trigger comprises at least one of a load-balancing event, a failover event, a roaming event, or a user-initiated event;
determine a target gateway based on a plurality of selection parameters within the device assignment routine;
receive loT device details from the source gateway; and
transmit the loT device details to the target gateway to enable the loT device to connect with the target gateway, wherein the loT device details include at least an identifier associated with at least one of an IoT device or plurality of loT devices, the identifier having been utilized by the source gateway to connect to the loT device.

2. The sitewide controller device of claim 1, wherein the gateway health data comprises at least one of CPU load, memory usage, network throughput, radio utilization including transmit, receive, and idle timing, mix of reported and assigned device types, received signal strengths, transmit power, response times, timeout events, latency indicators, clock accuracy, connection stability, connection failures, response failures, packet retries, diagnostic error reports, data consumption, noise levels across communication channels, channel map, spectral capacity, or data packet loss.

3. The sitewide controller device of claim 1, wherein the load-balancing event occurs in response to the gateway health data of the source gateway exceeding load thresholds based on at least one of CPU usage, memory consumption, or congestion metrics.

4. The sitewide controller device of claim 1, wherein the failover event occurs in response to the source gateway experiencing a failure or a maintenance downtime.

5. The sitewide controller device of claim 1, wherein the roaming event occurs in response to at least one of:
the sitewide controller determining a signal strength differential that is based at least in part on gateway data received from the target gateway indicating that the target gateway is receiving a signal having a first signal strength from the loT device, the first signal strength being greater than a second strength of the signal received by the source gateway, or
the sitewide controller determining movement of the loT device based at least in part on a predictive roaming model that includes historical model data correlated to signal strength data.

6. The sitewide controller device of claim 1, wherein the identifier associated with at least one of an loT device or plurality of loT devices includes at least one of a MAC address or a vMAC address.

7. The sitewide controller device of claim 1, wherein the plurality of selection parameters of the target gateway comprise at least one of load capacity, radio availability, proximity of the target gateway to an loT device, signal strength, communication history of the target gateway and the loT device, or spectral resources.

8. The sitewide controller device of claim 1, wherein the loT device details includes at least one of timing data, device-specific identifiers, encryption keys, communication states, device status indicators, or protocol versions.

9. A method for network reconfiguration, the method comprising:
collecting a network health data and gateway health data from a source gateway;
transmitting a device assignment signal to a source gateway, the device assignment signal configured to initiate a device assignment routine when a device assignment trigger is met at the source gateway, wherein the device assignment trigger comprises at least one of a load-balancing event, a failover event, a roaming event, or a user-initiated event;
determining a target gateway based on a plurality of selection parameters within the device assignment routine;
receiving loT device details from the source gateway; and
transmitting the loT device details to the target gateway to enable the loT device to connect with the target gateway, wherein the loT device details includes at least an identifier associated with at least one of an IoT device or plurality of loT devices, the identifier having been utilized by the source gateway to connect to the loT device.

10. The method of claim 9, wherein the gateway health data comprises at least one of CPU load, memory usage, network throughput, radio utilization including transmit, receive, and idle timing, mix of reported and assigned device types, received signal strengths, transmit power, response times, timeout events, latency indicators, clock accuracy, connection stability, connection failures, response failures, packet retries, diagnostic error reports, data consumption, noise levels across communication channels, channel map, spectral capacity, or data packet loss.

11. The method of claim 9, wherein initiating the device assignment routine for the load balancing event comprises initiating the device assignment routine in response to the gateway health data of the source gateway exceeding load thresholds based on at least one of CPU usage, memory consumption, or congestion metrics,
or the method of claim 9, wherein initiating the device assignment routine for the failover event comprises initiating the device assignment routine in response to the source gateway experiencing a failure or a maintenance downtime,
or the method of claim 9, wherein initiating the device assignment routine for the roaming event comprises initiating the device assignment routine in response to at least one of:
determining a signal strength differential that is based at least in part on gateway data received from the target gateway indicating that the target gateway is receiving a signal having a first signal strength from the loT device, the first signal strength being greater than a second strength of the signal received by the source gateway, or
determining movement of the loT device based at least in part on a predictive roaming model that includes historical model data correlated to signal strength data,
or the method of claim 9, wherein the identifier associated with at least one of an loT device or plurality of loT devices includes at least one of a MAC address or a vMAC address,
or the method of claim 9, wherein the plurality of selection parameters of the target gateway comprises at least one of load capacity, radio availability, proximity of the target gateway to an loT device, signal strength, communication history of the target gateway and the loT device, or spectral resources
or the method of claim 9, wherein the loT device details includes at least one of timing data, device-specific identifiers, encryption keys, communication states, device status indicators, or protocol versions.

12. A computer-readable storage medium, storing instructions thereon, that, when executed by a processor, configure the processor to:
collect network health data and gateway health data from a source gateway;
transmit a device assignment signal to a source gateway, the device assignment signal configured to initiate a device assignment routine when a device assignment trigger is met at the source gateway, wherein the handoff trigger comprises at least one of a load-balancing event, a failover event, a roaming event, or a user-initiated event;
determine a target gateway based on a plurality of selection parameters within the device assignment routine;
receive loT device details from the source gateway; and
transmit the loT device details to the target gateway to enable the target gateway to connect with the loT device wherein the loT device details include at least an identifier associated with at least one of an loT device or plurality of loT devices, the identifier having been utilized by the source gateway to connect to the loT device.

13. The storage medium of claim 12, wherein the gateway health data comprises at least one of CPU load, memory usage, network throughput, radio utilization including transmit, receive, and idle timing, mix of reported and assigned device types, received signal strengths, transmit power, response times, timeout events, latency indicators, clock accuracy, connection stability, connection failures, response failures, packet retries, diagnostic error reports, data consumption, noise levels across communication channels, channel map, spectral capacity, or data packet loss.

14. The storage medium of claim 12, wherein the load-balancing event occurs in response to the gateway health data of the source gateway exceeding load thresholds based on at least one of CPU usage, memory consumption, or congestion metrics.

15. The storage medium of claim 12, wherein the failover event occurs in response to the source gateway experiencing a failure or a maintenance downtime.
